# EUROPÄISCHE PATENTSCHRIFT

(11) **EP 3 391 728 B1**
(45) Veröffentlichungstag und Bekanntmachung des Hinweises auf die Patenterteilung: **07.09.2022**
(21) Anmeldenummer: 18000353.5
(22) Anmeldetag: 13.04.2018
(51) Int. Cl.: A01F 15/08

(54) **BALLENPRESSE**
BALING PRESS
PRESSE À BALLES

(30) Priorität: 21.04.2017 DE 102017003881
(43) Veröffentlichungstag der Anmeldung: 24.10.2018
(73) Patentinhaber: Maschinenfabrik Bernard Krone GmbH & Co. KG, 48480 Spelle (DE)
(72) Erfinder: Kreyenhagen, Michael, 49163 Bohmte (DE)
(74) Vertreter: Busse & Busse

(56) Entgegenhaltungen:
- EP-A1- 2 057 879
- DE-A1- 10 329 136
- DE-C- 925 554
- GB-A- 837 518
- US-A1- 2016 021 826

## Beschreibung

Die Erfindung betrifft eine Ballenpresse für landwirtschaftliches Erntegut mit einem Presskanal und mit einem um eine Schwingenschwenkachse, die in einer zu einer Längsmittelachse des Presskanals orthogonalen Schwingenschwenkachsenebene angeordnet ist, schwenkbar gelagerten und von mindestens einer Antriebsanordnung angetriebenen Nadelschwinge, welche mindestens eine durch Schwenkung der Nadelschwinge durch den Presskanal bewegliche Bindenadel aufweist, wobei die Antriebsanordnung ein um eine Antriebsdrehachse drehbar gelagertes Antriebselement und einen exzentrisch daran angeordneten Antriebshebel umfasst.

Derartige Ballenpressen sind aus dem Stand der Technik bekannt. Sie finden häufig als mobile Ballenpressen in der Landwirtschaft Anwendung, um beispielsweise Stroh oder Heu zu Ballen zu pressen. Derartige Ballenpressen können jedoch auch als stationär betriebene Ballenpressen Verwendung finden. In der Landwirtschaft, besteht ein Bedarf an hochleistungsfähigen, insbesondere hochverdichtenden Ballenpressen mit hohem Durchsatz und hoher Zuverlässigkeit und Verfügbarkeit.

Die DE 103 29 136 A1 offenbart eine Großballenpresse mit einer Knotereinrichtung und einer Nadelschwinge, welche um eine Achse schwenkbar angeordnet ist. Durch eine Verschwenkung der Nagelschwinge werden daran angeordnete Bindenadeln durch den Presskanal geführt. Angetrieben wird die Nagelschwinge dazu von einer Zugstange, die wiederum mit einem Kurbelarm gekoppelt ist. Mit einer Umdrehung des Kurbelarmes werden die Bindenadeln durch den Presskanal und zurück in ihre Ausgangsstellung bewegt.

Aus der DE 925 554 C ist eine Schnurhalterklemme für Bindeapparate von Landmaschinen bekannt, insbesondere von Bindemähern, Strohpressen und Strohbindern, bei der eine Klemmfeder der Schnurhalterklemme während des Bindevorganges durch zwangsweise Verschiebung ihres Widerlagers vorübergehend entspannt wird. Die Widerlager der Klemmfedern aller Bindeapparate sind quer durchgehend auf einer auf dem Presskanal gelagerten Welle befestigt, durch deren abwechselnde Verdrehung im Uhrzeigersinne und entgegengesetzt die Widerlager hin und her verschoben und die Klemmfedern gespannt oder entspannt werden. Ein eine Bindenadel antreibender Hebel hat zwei Hebelenden, die um einer ortsfeste Achse verschwenkbar sind. Eine Übersetzung der Antriebsbewegung ist hierbei nicht zu vollziehen, so dass während einer Schwenkbewegung keine Beschleunigung oder verlangsamte Bewegung durchzuführen sind.

Aufgabe der vorliegenden Erfindung ist es, eine Ballenpresse der eingangs genannten Art auf möglichst einfache Art in ihrer Leistungsfähigkeit zu verbessern.

Erfindungsgemäß wird die Aufgabe dadurch gelöst, dass die Antriebsanordnung eine Koppeleinrichtung aufweist, welche um eine ortsfest gegenüber dem Presskanal positionierte Koppelschwenkachse schwenkbar angeordnet ist, wobei die Koppeleinrichtung von der Schwingenschwenkachse der Nadelschwinge beabstandet an der Nadelschwinge angeordnet ist, wobei der Antriebshebel an der Koppeleinrichtung angeordnet ist, wobei die Schwingenschwenkachse, die Antriebsdrehachse, die Koppelschwenkachse und die Antriebshebeldrehachse parallel und jeweils beabstandet zueinander angeordnet sind, wobei die Koppeleinrichtung einen ersten Koppelhebel und zumindest einen weiteren Koppelhebel umfasst, wobei der erste Koppelhebel mit dem weiteren Koppelhebel beweglich verbunden ist, wobei der erste Koppelhebel um die Koppelschwenkachse schwenkbar angeordnet ist und wobei der um die Antriebshebeldrehachse schwenkbare Antriebshebel an dem ersten Koppelhebel angelenkt ist.

Durch das Vorsehen einer Koppeleinrichtung in der Antriebsanordnung der Nadelschwinge kann die Kinematik der Nadelschwinge gegenüber den bisher bekannten Ballenpressen verändert werden. Insbesondere ermöglicht es die Koppeleinrichtung, die an der Nadelschwinge angeordneten Bindenadeln im Vergleich zu einer herkömmlichen Antriebsanordnung schneller aus einer Ausgangstellung durch den Presskanal zu führen und somit ein einen Ballen umschlingendes Bindematerial zügiger einer Einrichtung zuzuführen, die das Bindematerial verbindet. Durch die Verwendung einer Antriebsanordnung mit einer Koppeleinrichtung kann der Zeitabschnitt, in dem die Bindenadel im Bereich einer das Bindematerial verbindenden Einrichtung verbleibt, im Verhältnis zu dem Zeitabschnitt, der zum Durchführen der Bindenadel durch den Presskanal benötigt wird, verlängert werden. Somit kann die Dauer eines Bindezyklus insgesamt verkürzt werden, ohne dass wesentliche Änderungen an weiteren angetriebenen Teilen der Bindeeinrichtung vorgenommen werden müssen. Der Bindezyklus ist der Vorgang, durch den zwei Bereiche des einen fertig gepressten Ballen umschlingenden Bindematerials verbunden werden.

Außerdem ermöglicht die erfindungsgemäße Ausgestaltung einen einfachen Aufbau der Antriebsanordnung, da die Bewegungskomponenten der Nadelschwinge, des Antriebselementes und zumindest eines Teils der Koppeleinrichtung in zueinander parallelen Ebenen oder in derselben Ebene angeordnet sind. Dies ermöglicht die Verwendung von Verbindungselementen mit einem Freiheitsgrad.

In einer vorteilhaften Ausführungsform umfasst die Ballenpresse eine Antriebsanordnung auf einer Seite des Presskanals. Hierdurch sind nur eine Koppeleinrichtung als Teil der Antriebsanordnung sowie nur eine Antriebsanordnung notwendig. Der bauliche Aufwand für die Antriebsanordnung der Nadelschwinge wird somit minimiert.

In einer alternativen vorteilhaften Ausführungsform umfasst die Ballenpresse je eine Antriebsanordnung auf zwei gegenüberliegenden Seiten des Presskanals. Hierdurch wird eine Kraft auf beiden Seiten der Nadelschwinge in diese eingeleitet. Durch die beidseitige Einleitung der Kraft werden Torsionskräfte auf die Nadelschwinge sowie auf die Antriebsanordnung reduziert. Dies erhöht die Lebensdauer der Ballenpresse, insbesondere wenn bei sehr schnellen Bewegungen der Nadelschwinge hohe Kräfte auf die Nadelschwinge und die Antriebsanordnungen einwirken.

Erfindungsgemäß umfasst die Koppeleinrichtung einen ersten Koppelhebel und zumindest einen weiteren Koppelhebel, wobei der erste Koppelhebel mit dem weiteren Koppelhebel beweglich verbunden ist. Durch die Verwendung von zwei beweglich miteinander verbundenen Koppelhebeln wird eine mechanisch einfache Ausführungsform der Koppeleinrichtung realisiert, die die gewünschte Veränderung in der Kinematik der Nadelschwinge bewirken kann. Besonders bevorzugt ist der erste Koppelhebel um die Koppelschwenkachse schwenkbar angeordnet und der Antriebshebel ist an dem ersten Koppelhebel angeordnet. Durch das Anordnen des Antriebshebels am ersten Koppelhebel, der über die Koppelschwenkachse ortsfest gegenüber dem Presskanal festgelegt ist, sind diese Elemente der Antriebsanordnung definiert zueinander festgelegt. Hierdurch wird die Gefahr von Fehlfunktionen der Antriebsanordnung reduziert und die Zuverlässigkeit der Ballenpresse gesteigert.

Besonders bevorzugt sind die Schwenkachsen aller von der Koppeleinrichtung umfassten Gelenke parallel zur Schwingenschwenkachse positioniert. In diesem Fall sind alle Bewegungskomponenten der Antriebsanordnung in parallel zueinander angeordneten Ebenen oder in identischen Ebenen angeordnet. Dies vereinfacht die Konstruktion einer entsprechenden Antriebsanordnung weiterhin, da nun ausschließlich Verbindungselemente mit einem Freiheitsgrad zum Einsatz kommen können. Zudem ist die Zuverlässigkeit und Lebensdauer der Ballenpresse erhöht.

Vorteilhafterweise ist eine zur Antriebsdrehachse parallele Antriebshebeldrehachse, um die der Antriebshebel drehbar am Antriebselement angeordnet ist, in einer Ausgangsstellung, in der sich die Nadelschwinge vor und nach einem eine Ballenbindung abschließenden Nadelschwingenzyklus befindet, aus einer Koppelebene verlagert, in der die Antriebsdrehachse und eine Antriebskoppelschwenkachse, um die der Antriebshebel schwenkbar an der Koppeleinrichtung angeordnet ist, liegen. Die direkte Verbindung zwischen der Antriebsdrehachse und einer Antriebskoppelschwenkachse ist in der Ausgangsstellung in der Koppelebene angeordnet. Hierbei ist die Antriebskoppelschwenkachse die Achse, um die der Antriebshebel schwenkbar mit der Koppeleinrichtung verbunden ist. Die Antriebshebeldrehachse, um die herum der Antriebshebel drehbar am Antriebselement angeordnet ist, befindet sich in einer Ausgangsstellung nicht in der Koppelebene. Durch die Wahl der Lage der Antriebshebeldrehachse relativ zur Koppelebene kann die Kinematik der Nadelschwinge während des Nadelschwingenzyklus beeinflusst werden. Hierdurch ist es möglich, den Nadelschwingenzyklus an das gewünschte Verhalten anzupassen. Besonders vorteilhaft liegen die Antriebsdrehachse und die Antriebshebeldrehachse in einer Triebebene, die in einer Ausgangsstellung um 30° bis 90° gegenüber der Koppelebene geneigt positioniert ist. Ausgehend von der Modifizierung bekannter Nadelschwingenantriebe von Ballenpressen hat sich eine Positionierung der Antriebshebeldrehachse in einem Bereich, der 30° bis 90° gegenüber der Koppelebene geneigt ist, als vorteilhaft erwiesen. Hierdurch erfährt die Nadelschwinge bei der Bewegung aus der Ausgangsstellung eine höhere anfängliche Beschleunigung, die die Zeit, die Bindenadel zum Durchqueren des Presskanals benötigen, im Vergleich zu der um einen oberen Totpunkt herum verbrachten Zeit der Bindenadel verkürzt.

Bevorzugt haben der gegenüber dem Presskanal ortsfest angeordnete Bereich der Koppeleinrichtung und der an der Nadelschwinge angeordnete Bereich der Koppeleinrichtung in der Ausgangsstellung einen im Wesentlichen maximal möglichen Abstand voneinander. So ist es möglich, nur einen Teil einer Umdrehung des Antriebselementes für die Bewegung der Bindenadel aus der Ausgangsstellung durch den Presskanal zu einem oberen Totpunkt und wieder heraus aus dem Presskanal zu verwenden. Der verbleibende Teil der Umdrehung des Antriebelements bewirkt eine Auslenkung der Koppeleinrichtung in eine der ersten Auslenkung entgegengesetzte Richtung bis die Koppeleinrichtung wieder eine gestreckte Stellung und die Nadelschwinge damit wieder die Ausgangsstellung erreicht. Dabei taucht die Bindenadel noch einmal zumindest teilweise in den Presskanal ein. Das Durchtauchen, also das Auslenken der Koppeleinrichtung in eine der ersten Auslenkung entgegengesetzten Richtung, sowie das Eintauchen der Bindenadel in den Presskanal kann durch das Vorsehen von geeigneten Sperrvorrichtungen, beispielsweise in Form von Anschlagselementen, in der Koppeleinrichtung vermieden werden. Die Vollendung der Umdrehung des Antriebselements muss jedoch dennoch gewährleistet bleiben. Dies kann beispielsweise durch das Anbringen von elastischen Elementen in oder an dem Antriebshebel realisiert werden. Diese können zum Beispiel durch Federelemente ausgebildet sein.

Bevorzugt ist bei einer maximalen Schwenkung der Nadelschwinge ein im Presskanal angeordneter Presskolben im Wesentlichen in einer Strecklage positioniert. In der Strecklage ist der Presskolben maximal in den Presskanal eingeführt und bringt den maximalen Pressdruck auf den zu bindenden Ballen auf. Wenn die Bindenadel mit Erreichen der Strecklage des Presskolbens im oberen Totpunkt ist und das Bindematerial an die das Bindematerial verbindende Einrichtung übergibt, kann der Ballen mit maximal möglicher Pressdichte gebunden werden und die Dichte des Ballens maximiert werden. Somit erhöht sich die Leistungsfähigkeit der Ballenpresse. Die Bindenadel durchläuft in der vorliegenden Ausgestaltung der erfindungsgemäßen Ballenpresse den Presskanal von einer Ausgangsstellung bis zum oberen Totpunkt in weniger als 0,5 Sekunden. Dies stellt eine deutliche Zeitersparnis gegenüber den 0,6 bis 0,7 Sekunden bei den bekannten, konventionell angetriebenen Ballenpressen dar. Hierdurch kann die Presskolbenfrequenz erhöht und der Ballen bei einer höheren Pressdichte vom Bindematerial umschlungen werden.

Mit Vorteil umfasst die Nadelschwinge mindestens drei sich jeweils im Wesentlichen in zur Schwingenschwenkachse senkrechten Ebenen erstreckende Bindenadeln. Ein zu bindender Ballen wird entsprechend mindestens an drei verschiedenen Stellen von Bindematerial umschlungen. Dies erhöht die Festigkeit und Stabilität der gebundenen Ballen und ermöglicht somit dichter gepresste Ballen und damit eine höhere Leistungsfähigkeit der Ballenpresse.

Vorzugsweise ist das Antriebselement an einer einen Bindezyklus mit einer Umdrehung steuernden Steuerwelle angeordnet. Bei herkömmlichen Ballenpressen werden die für das Verbinden des Bindematerials notwendigen Elemente über eine zentrale Steuerwelle gesteuert. Hierbei wird regelmäßig ein Bindezyklus durch eine Umdrehung der Steuerwelle gesteuert. Durch das Anordnen des Antriebselementes an der Steuerwelle wird die Bewegung der Nadelschwinge und damit der Bindenadeln vom Antrieb der das Bindematerial verbindenden Elemente abhängig gemacht. Hierdurch wird die Zuverlässigkeit und Verfügbarkeit der Ballenpresse verbessert.

In einer vorteilhaften Ausführungsform weist die Ballenpresse mindestens eine Bindeeinrichtung für ein bandförmiges Bindematerial aus vorzugsweise einem verschweißbaren oder verklebbaren Kunststoffmaterial zur Umhüllung des zu pressenden Ballen auf. Weiterhin weist die Bindeeinrichtung einen das Bindematerial stoffschlüssig verbindenden Stoffschlusserzeuger auf.

Die Verwendung eines bandförmigen Bindematerials aus vorzugsweise einem verschweißbaren oder verklebbaren Kunststoffmaterial, das durch einen Stoffschlusserzeuger stoffschlüssig verbunden wird, weist gegenüber dem bisher in Ballenpressen für landwirtschaftliches Erntegut verwendeten Bindematerial, insbesondere Bindegarn, das durch Knoten verbunden wird, eine deutlich höhere Zugfestigkeit auf. Die von der Wahl des Werkstoffs des bandförmigen Bindematerials sowie den Abmessungen des Bindematerials abhängige, maximal erreichbare Zugfestigkeit kann bei einem stoffschlüssig verbundenen bandförmigen Bindematerial gegenüber dem üblichen geknoteten Material das Doppelte bis Dreifache betragen. Hierdurch kann die Menge des Bindematerials um einen Ballen bzw. die Anzahl an Bindeeinrichtungen auf einer Ballenpresse bei gleichen Ballenabmessungen gegenüber dem Stand der Technik verringert und/oder die Pressdrücke und damit die Packungsdichte und somit auch die Gewichte der erzeugten Ballen gesteigert werden. Die erreichbare Packungsdichte von Ballen in landwirtschaftlichen Ballenpressen ist bei den derzeit bekannten Ballenpressen mit Knotern durch die Zugfestigkeit des geknoteten Bindematerials begrenzt. Diese Limitierung kann durch die Verwendung eines bandförmigen Bindematerials, das durch einen Stoffschlusserzeuger stoffschlüssig verbunden wird, überwunden werden.

Mit Vorteil weist die Bindeeinrichtung eine Abrolleinrichtung und einen Bandspeicher auf, der einen Teil des zwischen der Abrolleinrichtung und dem Stoffschlusserzeuger geführten Bindematerials aufnimmt. Der Bandspeicher weist mindestens zwei von dem Bindematerial umschlungene Bandspeicherachskörper auf, von denen mindestens einer als Freiachskörper beweglich angeordnet ist. Hierdurch ist der Abstand der Bandspeicherachskörper zueinander veränderbar. Der Bandspeicher weist weiterhin mindestens ein Bandspeicherrückstellelement auf, durch das der Freiachskörper mit einer den Freiachskörper in eine den Abstand der Bandspeicherachskörper vergrößernde Richtung bewegenden Kraft beaufschlagbar ist.

Das gerollt gelagerte bandförmige Bindematerial muss aufgrund des rechteckigen Querschnitts abgerollt werden. Beim Bindezyklus stellt dies ein Problem dar. Beim Durchführen des Bindematerials mittels der Bindenadeln durch den Presskanal müssen längere Abschnitte des Bindematerials in sehr kurzer Zeit, von 0,6 bis 0,7 Sekunden bis hinab zu weniger als 0,4 Sekunden, bereitgestellt und durch den Presskanal bewegt werden. Durch das hohe Trägheitsmoment des gerollten Bindematerials würde die Antriebsanordnung der Nadelschwinge eine kurzfristig sehr hohe Leistungsaufnahme aufweisen, wenn durch die starke Belastung nicht das Bindematerial reißen oder Teile der Ballenpresse wie die Bindenadel beschädigt würden.

Die Verwendung eines bandförmigen Bindematerials wird dadurch ermöglicht, dass an der Ballenpresse ein Bandspeicher vorgesehen ist. Dieser nimmt einen Teil des Bindematerials in sich auf und kann dieses sehr schnell bei vergleichsweise geringen Kräften abgeben, wenn die Bindenadel das Bindematerial durch den Presskanal führt. Im Anschluss füllt sich der Bandspeicher zwischen zwei Bindezyklen wieder langsam, so dass er vor dem nächsten Bindezyklus, bei dem Bindematerial mittels der Bindenadel durch den Presskanal geführt wird, wieder gefüllt ist. Der Bandspeicher ermöglicht somit ein kontinuierlicheres Abrollen des Bindematerials und vermeidet extreme Leistungs- und Belastungsspitzen.

Hierzu sind Bandspeicherachskörper des Bandspeichers im Abstand zueinander so veränderbar, dass durch dessen Veränderung zumindest Bindematerial einer einer Abstandsdifferenz der Bandspeicherachskörper entsprechenden Länge, vorzugsweise jedoch ein Vielfaches der Abstandsdifferenz der Bandspeicherachskörper, in kurzer Zeit freigegeben werden kann.

Das Rückstellelement beaufschlagt den Freiachskörper mit einer Kraft, durch die der Freiachskörper sich in eine Richtung bewegt, wodurch der Abstand zwischen den Bandspeicherachskörpern vergrößert wird. Der Bandspeicher zieht dabei Bindematerial von der Abrolleinrichtung ab und füllt sich wieder mit Bindematerial. Dieses Bindematerial steht dann für den nächsten Bindezyklus zur Verfügung. Gleichzeitig gibt der Bandspeicher ein Teil des Bindematerials ab, das bei einem Pressvorgang eines neuen Ballens um einen Teil von dessen Umfang abgelegt wird.

Bevorzugt sind die Bandspeicherachskörper parallel zueinander ausgerichtet. Das Bindematerial kann hierdurch glatt und ohne Torsion in dem Bandspeicher geführt werden. Das Bindematerial wird nur gering beansprucht. Dies ermöglicht ein zuverlässiges und betriebssicheres Binden eine Ballens und damit die Leistungsfähigkeit der Ballenpresse.

Vorzugsweise sind die Bandspeicherachskörper jeweils alternierend mehrfach nach Art eines Flaschenzuges von dem Bindematerial umschlungen. Durch das mehrfache Umschlingen der Bandspeicherachskörper kann bei einer Änderung des Abstandes der Bandspeicherachskörper zueinander ein Vielfaches der Abstandsdifferenz an Bindematerial freigegeben werden. Hierdurch kann der Bauraum des Bandspeichers in der Ballenpresse verkleinert werden.

Bevorzugt sind die Bandspeicherachskörper in einer Ebene relativ zueinander beweglich. Dies ermöglicht den Aufbau eines Bandspeichers als längserstrecktes Bauteil, das sich harmonisch in eine Ballenpresse, die im Wesentlichen von dem längserstreckten Presskanal bestimmt wird, einfügen lässt. Dies ermöglicht den Bau einer kompakten und kostengünstigen Ballenpresse.

In einer vorteilhaften Ausgestaltung ist ein Bandspeicher einer Bindeeinrichtung zugeordnet. Die einzelnen Bandspeicher weisen dadurch vergleichsweise kleine Abmessungen auf und können entsprechend des zur Verfügung stehenden Bauraumes optimal in der Ballenpresse angeordnet werden.

In einer alternativen vorteilhaften Ausführungsform ist ein Bandspeicher mehreren Bindeeinrichtungen der Ballenpresse zugeordnet. Hierdurch wird die Anzahl notwendiger Bandspeicher reduziert und dadurch der insgesamt notwendige Bauraum sowie das insgesamt notwendige Gewicht des Bandspeichers gegenüber einer Lösung mit einzelnen Bandspeichern für jede Bindeeinrichtung reduziert.

Vorteilhafterweise weist das maximal durch eine Änderung des Abstandes der Bandspeicherachskörper freigebbare Bindematerial eine Länge zwischen 1 m und 4 m auf. Die maximal freigebbare Länge des Bindematerials und damit die Abmessungen des Bandspeichers können somit an die Höhe des Presskanals bzw. die Höhe der zu pressenden Ballen angepasst werden. Der Bandspeicher sollte mindestens Bindematerial der doppelten Ballenhöhe zzgl. einer für den Stoffschlusserzeuger notwendigen Überlappungslänge freigeben können. Eine maximal freigebbare Bindemateriallänge zwischen 1 m und 4 m ist somit für die derzeit gebräuchlichen Ballenhöhen bei Ballenpressen für landwirtschaftliches Erntegut geeignet.

Bevorzugt beträgt die maximal mögliche Abstandsdifferenz der Bandspeicherachskörper zwischen 300 und 600 mm, vorzugsweise zwischen 400 und 500 mm. Das Bindematerial umschlingt die Bandspeicherachskörper zwei bis zwölf Bahnen, vorzugsweise sechs bis acht Bahnen im Bandspeicher ausbildend. Bandspeicher mit maximal möglicher Abstandsdifferenz der Bandspeicherachskörper zwischen 300 und 600 mm, vorzugsweise zwischen 400 und 500 mm, haben Außenabmessungen, die sich besonders einfach in Ballenpressen integrieren lassen. Durch die Mehrfachumschlingung wird auch bei vergleichsweisen kurzen Achskörperabstandsänderungen die nötige Länge des freigebbaren Bindematerials erreicht und die Beschleunigung des Freiachskörpers gering gehalten.

Vorzugsweise ist das Bandspeicherrückstellelement als Zugfeder ausgestaltet. Eine Ausgestaltung als Zugfeder ermöglicht eine einfache und kostengünstige Realisierung des Bandspeicherrückstellelementes. Zudem kann die Zugfeder relativ leicht zugänglich an der Ballenpresse angeordnet werden, so dass diese bei einem möglichen Defekt einfach und zügig gewechselt werden kann. Hierdurch wird die Wartbarkeit und somit die Betriebssicherheit und Zuverlässigkeit erhöht.

Vorzugsweise weist die Bindeeinrichtung die Abrolleinrichtung sowie eine Regeleinrichtung auf, wobei die Abrolleinrichtung gegenüber dem Presskanal ortsfest gelagert ist und einen aufgerollten Teil des Bindematerials und zumindest eine Bremskontaktfläche aufweist. Die Regeleinrichtung weist mindestens ein gegenüber dem Presskanal bewegbar gelagertes und durch einen abgerollten Teil des Bindematerials ansteuerbares Regelelement und mindestens einen durch eine Ansteuerung des Regelelementes von der Bremskontaktfläche lösbares Bremselement auf. Außerdem weist die Regeleinrichtung mindestens ein die Regeleinrichtung in eine Bremsstellung zurückstellendes Bremselementrückstellelement auf, in der die Abrolleinrichtung gebremst wird, wobei in der Bremsstellung die Bremskontaktfläche zumindest teilweise am Bremselement anliegt. In der Abrolleinrichtung ist der Bindematerialvorrat gelagert. Eine Vorratsrolle mit Bindematerial weist ein vergleichsweise großes Massenträgheitsmoment auf. Bei der Entnahme des Bindematerials von der Rolle würde diese in Rotation versetzt und nach Abschluss der Entnahme weiterdrehen. Hierdurch kann eine minimale Bandspannung in der Bindeeinrichtung unterschritten werden. Ein solches Nachrollen oder Ausrollen verhindert die vorliegende Regeleinrichtung, die eine lösbare Bremse aufweist, wobei die Bremse durch die Bandspannung gelöst bzw. bei abnehmender Bandspannung wieder wirksam wird.

Vorzugsweise umfasst die Abrolleinrichtung Bindematerial in Form einer Bandrolle und einen drehbaren und die Bandrolle tragenden Bandrollenträger. Durch die Trennung zwischen der das Bindematerial enthaltenden Bandrolle und dem Bandrollenträger ist die Ballenpresse einfach mit neuem Bindematerial zu bestücken.

Mit Vorteil ist die Abrolleinrichtung um eine zur Längsmittelachse des Presskanals orthogonale und zu einer Bodenebene parallele Abrolldrehachse drehbar. Hierbei beinhaltet die Bodenebene die in der Betriebsposition der Ballenpresse dem Boden nächste Seite des Presskanals. Dies ermöglicht eine einfachere Führung des Bindematerials in der Bindeeinrichtung. Weiterhin kann die Abrolleinrichtung an den Seiten bzw. parallel zu den Seiten der Ballenpresse angeordnet werden. Hier ist die Abrolleinrichtung leicht zugänglich für Bediener der Ballenpresse, so dass eine Bestückung der Abrolleinrichtung mit Bindematerial einfach möglich ist. Die einfache Zugänglichkeit erhöht die Verfügbarkeit und damit die Leistungsfähigkeit der Ballenpresse.

Vorzugsweise ist das Regelelement um eine Regelelementschwenkachse schwenkbar angeordnet, wobei die Regelelementschwenkachse ortsfest gegenüber dem Presskanal positioniert ist. Durch die schwenkbare Anordnung des Regelelementes kann unter Ausnutzung der Hebelwirkung eine einfache Betätigung der Bremse bzw. des Bremselementes durch das Regelelement erfolgen. Das Regelelement kann dabei durch vergleichsweise geringe Änderungen in der Spannung des Bindematerials bewegt werden.

Vorteilhafterweise ist das Regelelement durch eine erhöhte Bandspannung des Bindematerials derart bewegbar, dass das Bremselement dadurch von der Bremskontaktfläche lösbar ist. Somit wird bei Erhöhung der Bandspannung das Bremselement von der Bremskontaktfläche gelöst, so dass das Bindematerial leichter von der Bandrolle abrollen kann und somit die Bandspannung wieder absinkt.

Bevorzugt umfasst das Regelelement ein einen abgerollten Teil des Bindematerials zumindest teilweise umschließendes Führungselement. Hierdurch wird das Bindematerial in bzw. an dem Regelelement geführt. Dies erhöht die Zuverlässigkeit des Regelelementes, da das Risiko eines Abrutschens des Bindematerials von dem Führungselement reduziert wird. Besonders bevorzugt ist das Führungselement als Öse ausgebildet. In diesem Fall ist das Bindematerial von der Öse vollständig umschlossen, so dass es zuverlässig an seinem Platz relativ zu dem Regelelement gehalten wird und die Abrolleinrichtung ferner seine Aufgabe mit erhöhter Zuverlässigkeit erfüllen kann.

Vorteilhafterweise ist die Bremskontaktfläche durch eine Mantelfläche eines Kreiszylinders gebildet und das Bremselement weist eine zu einem Teil der Bremskontaktfläche komplementäre kreiszylindermantelabschnittsförmige Bremselementfläche auf. Die Bremselementfläche wirkt somit auf eine Bremskontaktfläche die nicht Teil der Bandrolle ist. Dadurch ist die Lage der Bremskontaktfläche zur Bremselementfläche bei einem Wechsel der Bandrolle unverändert. Dies erhöht die Zuverlässigkeit der Abrolleinrichtung. Durch die Ausgestaltung der Bremskontaktfläche als zylindermantelförmige Bremskontaktfläche kann eine Abhebungsbewegung des Bremselementes von der Bremskontaktfläche in einer zur Bewegung des Regelelements parallelen Ebene erfolgen. Hierdurch wird die Übertragung der Bewegung vom Regelelement auf das Bremselement erleichtert.

Bevorzugt ist das Bremsrückstellelement als Feder ausgebildet. Durch die Verwendung einer Feder kann die Kraft, mit der das Bremselement auf die Bremskontaktfläche in einer Bremsstellung einwirkt, an die Einsatzbedingungen der Ballenpresse angepasst werden. Durch die Anpassung der Feder an die vorherrschenden Einsatzbedingungen der Ballenpresse kann die Zuverlässigkeit der Ballenpresse erhöht werden.

In einer bevorzugten Ausführung sind das Regelelement und das Bremsrückstellelement einteilig ausgebildet. Dies vereinfacht den Aufbau von Bremsrückstellelement und Regelelement. Besonders bevorzugt ist in diesem Fall die Regeleinrichtung durch die auf das Regelelement wirkende Gewichtskraft in die Bremsstellung rückstellbar. Hierbei wirkt ein dem Regelelement zugeordnetes Gewicht als Rückstellelement der Regeleinrichtung. Bei einer solchen Gestaltung des Regelelementes kann ein weiteres, beispielsweise als Feder ausgestaltetes, Rückstellelement entfallen. Zumindest jedoch kann ein Rückstellelement beispielsweise in Form eines Federelementes durch die Wirkung der Gewichtskraft des Regelelements bzw. eines an dem Regelelement angeordneten Gewichtes unterstützt werden, so dass das separate Rückstellelement weniger stark beansprucht wird.

Bevorzugt umfasst die Regeleinrichtung eine zwischen dem Regelelement und dem Bremselement angeordnete und eine Übersetzung oder eine Untersetzung erzeugende Übertragungsvorrichtung. Hierdurch ist es möglich, kleine Wege des Regelelements in große Wege des Bremselement zu übersetzen oder umgekehrt zu untersetzen. Die Übertragungsvorrichtung mit einer entsprechenden Übersetzung oder Untersetzung kann entsprechend den Anforderungen an die Ballenpresse gewählt werden. Besonders bevorzugt weist die Übertragungsanordnung einen längenverstellbaren Steuerhebel auf. Hierdurch kann im Einsatz auf die Sensibilität der Regeleinrichtung Einfluss genommen werden. Dies erleichtert die Anpassung an die gegebenen Bedingungen und führt somit zu einer zuverlässigeren und höher verfügbaren Ballenpresse.

Vorteilhafterweise ist das Regelelement zwischen der Abrolleinrichtung und einem einen abgerollten Teil des Bindematerials umlenkenden Umlenkelement angeordnet. Die Anordnung des Regelelementes zwischen Abrolleinrichtung und Umlenkelement vermindert das Risiko einer Torsion des bandförmigen Bindematerials und eröffnet mehr Möglichkeiten, die Gewichte als Rückstellelement zu verwenden. Durch die Verwendung des Umlenkelementes können zudem die Abrolleinrichtung und das Regelelement vergleichsweise unabhängig von den Bedingungen und Erfordernissen der restlichen Bindeeinrichtungen in der Ballenpresse angeordnet werden. Insbesondere kann das Regelelement so angeordnet werden, dass die auf das Regelelement wirkende Gewichtskraft in eine für die Funktion der Regeleinrichtung vorteilhafte Richtung wirkend ausgerichtet ist.

Weitere Einzelheiten und Vorteile der Erfindung sind den folgend beschriebenen, schematisch dargestellten Ausführungsbeispielen zu entnehmen. Es zeigen:
Weitere Einzelheiten und Vorteile der Erfindung sind den folgend beschriebenen, schematisch dargestellten Ausführungsbeispielen zu entnehmen. Es zeigen:
- Fig. 1: eine Übersichtsdarstellung eines Ausführungsbeispiels einer erfindungsgemäßen Ballenpresse für landwirtschaftliches Erntegut;
- Fig. 2: eine Übersichtsdarstellung eines Ausführungsbeispiels einer Nadelschwinge sowie eines Antriebselements, des Antriebshebels und der Koppeleinrichtung;
- Fig. 3: eine Seitenansicht der Nadelschwinge gemäß Fig. 2 in Ausgangsstellung an der Ballenpresse;
- Fig. 4: eine Seitenansicht der Nadelschwinge gemäß Fig. 2 zwischen Ausgangsstellung und oberem Totpunkt an der Ballenpresse;
- Fig. 5: eine Seitenansicht der Nadelschwinge gemäß Fig. 2 im oberen Totpunkt an der Ballenpresse;
- Fig. 6: ein Schwenkwinkel-zu-Drehwinkel-Diagramm zur Nadelschwingenbewegung;
- Fig. 7: eine Übersichtsdarstellung eines Ausführungsbeispiels eines Bindetisches mit Bindenadeln der Nadelschwinge gemäß Fig. 2 im oberen Totpunkt;
- Fig. 8: eine Übersichtsdarstellung des Bindetisches zwischen zwei Bindezyklen;
- Fig. 9: eine Übersichtsdarstellung der Ballenpresse nach Fig. 1 mit Abrolleinrichtung;
- Fig. 10: eine Übersichtsdarstellung der Abrolleinrichtung nach Fig. 9 und einer Regeleinrichtung;
- Fig. 11: eine Übersichtsdarstellung der Regeleinrichtung nach Fig. 10;
- Fig. 12: eine Übersichtsdarstellung eines Ausführungsbeispiels eines Bandspeichers;
- Fig. 13: eine schematische Darstellung der Schritte eines Verlaufes eines Bindezyklus mit Veranschaulichung der Stellung der Teile einer Bindeeinrichtung auf einem Bindetisch und zwar beginnend mit Fig. 13a und endend mit Fig. 13i, jeweils in der Ausgangsstellung;
- Fig. 14: eine Übersichtsdarstellung eines Ausführungsbeispiels eines Schwenkelementes inklusive einem Schwenkelementantrieb;
- Fig. 15: eine Übersichtsdarstellung eines Ausführungsbeispiels eines Stoffschlusserzeugers inklusive einem Stoffschlusserzeugerantrieb;
- Fig. 16: eine Übersichtsdarstellung des geöffneten Stoffschlusserzeugers nach Fig. 15;
- Fig. 17: eine Übersichtsdarstellung des geschlossenen Stoffschlusserzeugers nach Fig. 15;
- Fig. 18: eine Übersichtsdarstellung eines Ausführungsbeispiels einer vorderen Klemmvorrichtung inklusive einem ersten Klemmvorrichtungsantrieb;
- Fig. 19: eine Übersichtsdarstellung der geöffneten vorderen Klemmvorrichtung nach Fig. 18;
- Fig. 20: eine Übersichtsdarstellung der geschlossenen vorderen Klemmvorrichtung nach Fig. 18;
- Fig. 21: eine Übersichtsdarstellung der vorderen Klemmvorrichtung nach Fig. 18 mit einem ausweichenden Gegenhalter;
- Fig. 22: eine Übersichtsdarstellung eines Ausführungsbeispiels einer hinteren Klemmvorrichtung inklusive einem zweiten Klemmvorrichtungsantrieb;
- Fig. 23: eine Übersichtsdarstellung der hinteren Klemmvorrichtung nach Fig. 22 mit einem Gegenschwenkelement;
- Fig. 24a: eine Übersichtsdarstellung eines Ausführungsbeispiels einer Kühleinrichtung;
- Fig. 24b: einen schematischen Schaltplan der Kühleinrichtung;
- Fig. 25: eine Übersichtsdarstellung mehrerer Bandführungselemente an einem Führungsträgerelement;

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1.

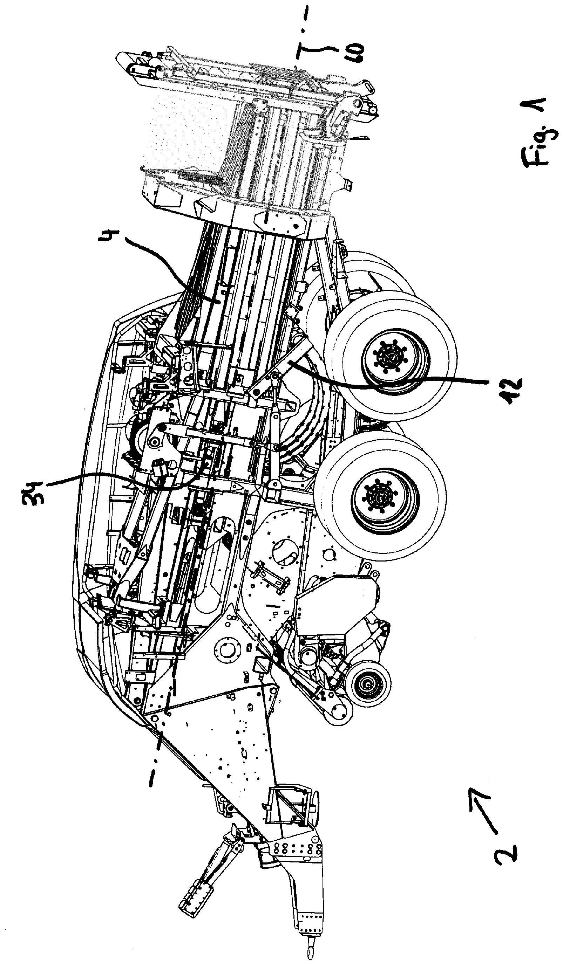

Fig. 1 zeigt eine erfindungsgemäße Ballenpresse 2 für landwirtschaftliches Erntegut. Die Ballenpresse 2 wird im Betrieb an eine landwirtschaftliche Zugmaschine angehängt und presst während der Fahrt mit einem Presskolben 34 kontinuierlich Ballen, die innerhalb eines Presskanals 4 von einem Umschlingungsmittel umhüllt werden und schließlich den Presskanal 4 durch eine vom Presskolben 34 abgewandte Öffnung verlassen. Der Presskanal 4 hat einen rechteckigen Querschnitt, durch dessen Zentrum eine Längsmittelachse des Presskanals 60 verläuft.

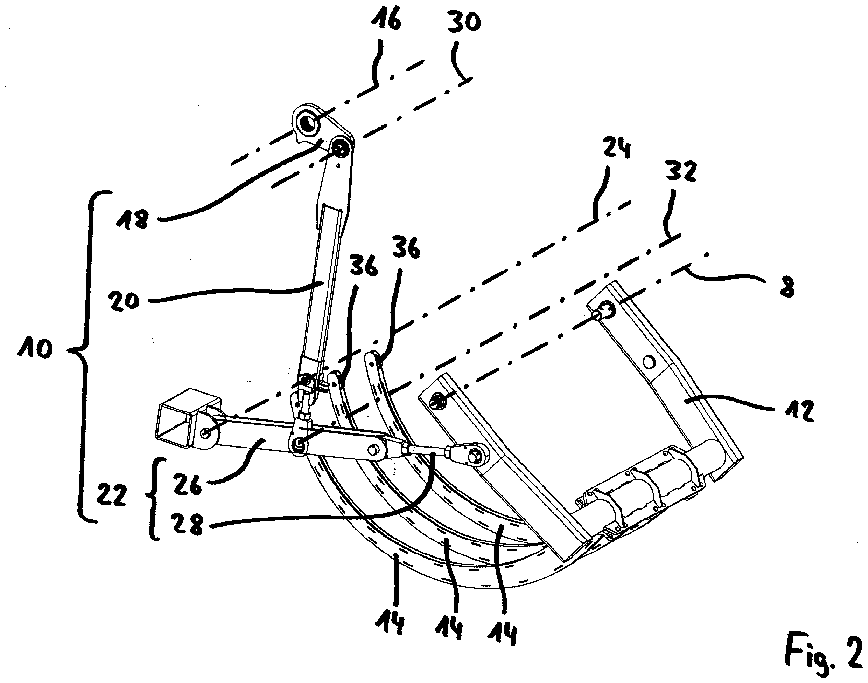

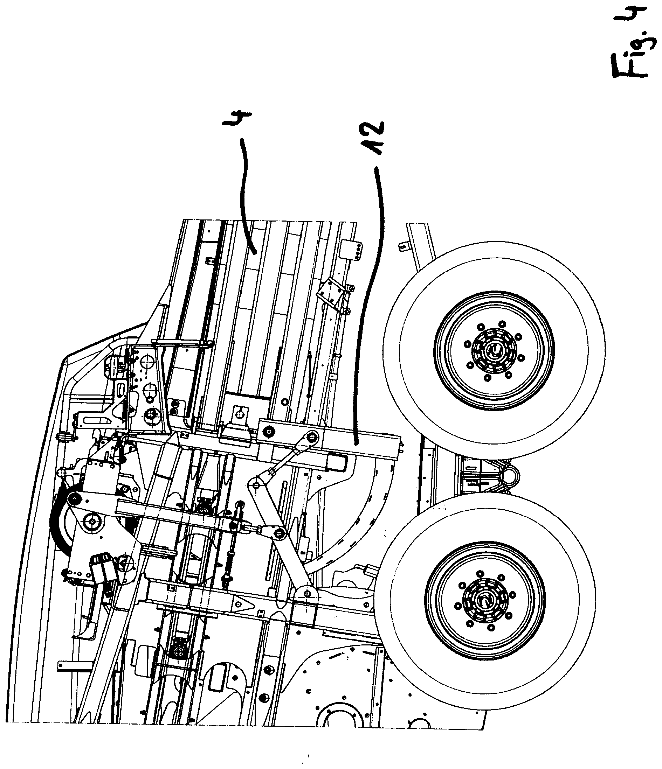

Eine von der Ballenpresse 2 umfasste Nadelschwinge 12 ist in den Fig. 2 bis 5 in unterschiedlichen Positionen dargestellt. Die Nadelschwinge 12 mit Bindenadeln 14 ist schwenkbar um eine Schwingenschwenkachse 8 gelagert. Die Schwingenschwenkachse 8 ist ortsfest gegenüber dem Presskanal 4. Angetrieben wird die Nadelschwinge 12 von einer Antriebsanordnung 10. Die Antriebsanordnung 10 umfasst ein Antriebselement 18, das um eine gegenüber dem Presskanal 4 ortsfeste Antriebsdrehachse 16 drehbar gelagert ist. An dem Antriebselement 18 ist ein Antriebshebel 20 drehbar um eine Antriebshebeldrehachse 30 gelagert.

Der Antriebshebel 20 ist mit der Nadelschwinge 12 über eine Koppeleinrichtung 22 verbunden. Die Koppeleinrichtung 22 umfasst einen ersten Koppelhebel 26 und einen weiteren Koppelhebel 28. Der erste Koppelhebel 26 ist um eine Koppelschwenkachse 24 schwenkbar angeordnet, wobei die Koppelschwenkachse 24 ortsfest gegenüber dem Presskanal 4 ist. Der weitere Koppelhebel 28 ist zum einen wiederum schwenkbar am ersten Koppelhebel 26 angeordnet und zum anderen schwenkbar und von der Schwingenschwenkachse 8 beabstandet an der Nadelschwinge 12 angeordnet. Der Antriebshebel 20 ist dabei schwenkbar um eine Antriebskoppelschwenkachse 32 am ersten Koppelhebel 26 festgelegt.

Die Schwingenschwenkachse 8 liegt in einer Schwingenschwenkachsenebene, zu welcher die Längsmittelachse des Presskanals 60 orthogonal ist. Die Antriebsdrehachse 16, die Antriebshebeldrehachse 30, die Koppelschwenkachse 24 und die Antriebskoppelschwenkachse 32 sind dabei parallel zur Schwingenschwenkachse 8 positioniert und weisen jeweils einen Lageabstand zueinander auf.

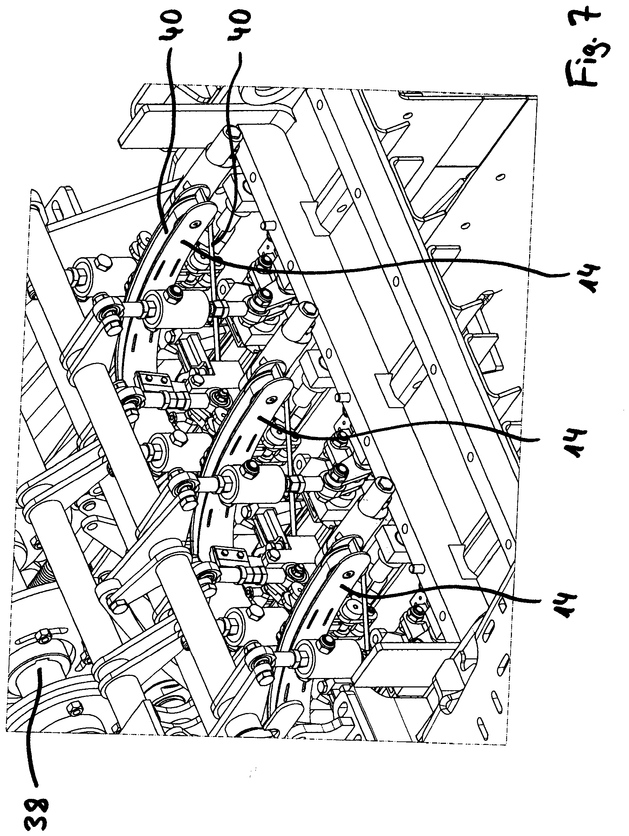

Das Antriebselement 18 ist angeordnet an einer Steuerwelle 38 (vgl. Fig. 7). Diese Steuerwelle 38 steuert mit einer Umdrehung einen Bindezyklus. Während eines Bindezyklus werden zwei Enden eines den gepressten Ballen umhüllenden Umschlingungsmittels miteinander verbunden. Teil des Bindezyklus ist die Führung des Umschlingungsmittels durch den Presskanal 4 anhand der Bindenadeln 14. Die Nadelschwinge 12 weist in Fig. 2 drei Bindenadeln 14 auf. Diese umfassen jeweils eine Führungsrolle 36.

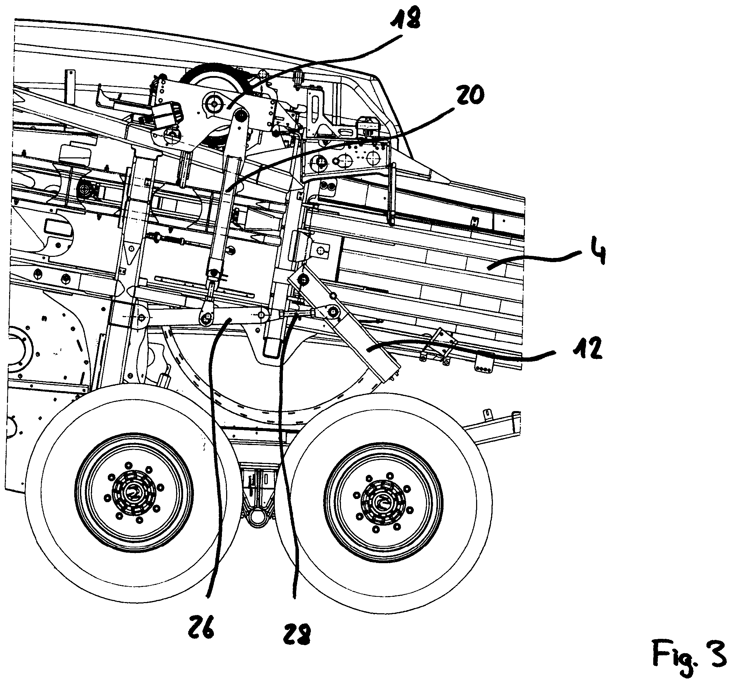

Die Fig. 3 bis 5 zeigen die Nadelschwinge 12 in drei unterschiedlichen Stellungen. In Fig. 3 befindet sich die Nadelschwinge 12 in einer Ausgangsstellung. Dabei liegen die Bindenadeln 14 vollumfänglich außerhalb des Presskanals 4. In dieser Ausgangsstellung befindet sich die Nadelschwinge 12 vor und nach einem jeden Bindezyklus. Kennzeichnend dabei ist, dass die Koppelschwenkachse 24 und der an der Nadelschwinge 12 angeordnete Bereich der Koppeleinrichtung 22 einen maximal möglichen Abstand voneinander haben, d. h., dass die Koppeleinrichtung 22 gestreckt ist. Gleichzeitig liegen die Antriebsdrehachse 16, die Antriebshebeldrehachse 30 und die Koppelschwenkachse 24 nicht in einer Ebene. Antriebselement 18 und Antriebshebel 20 sind als Einheit betrachtet nicht gestreckt.

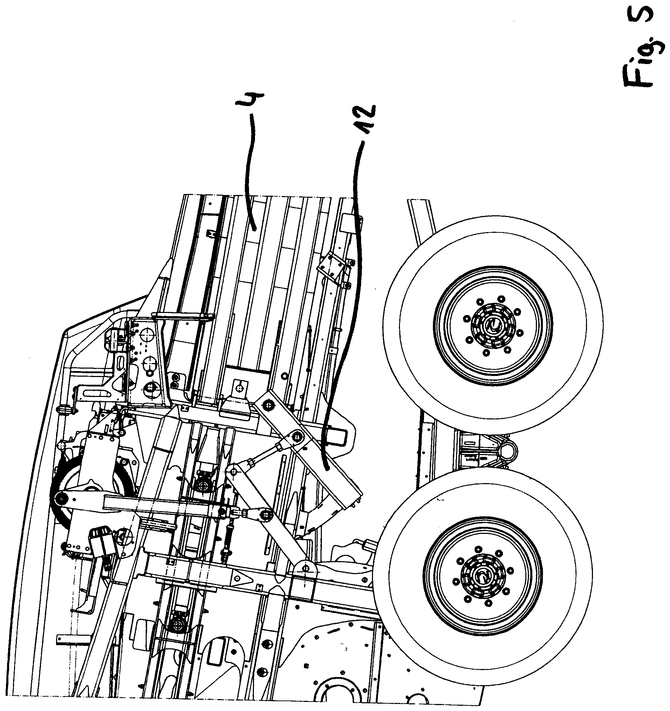

Während eines Bindezyklus wird die Nadelschwinge 12 bei konstanter Winkelgeschwindigkeit des Antriebselementes 18 schneller von der Ausgangsstellung in den oberen Totpunkt der Nadelschwinge 12 (vgl. Fig. 5) geschwenkt, als wenn Antriebselement 18 und Antriebshebel 20 als Einheit in der Ausgangsstellung gestreckt wären.

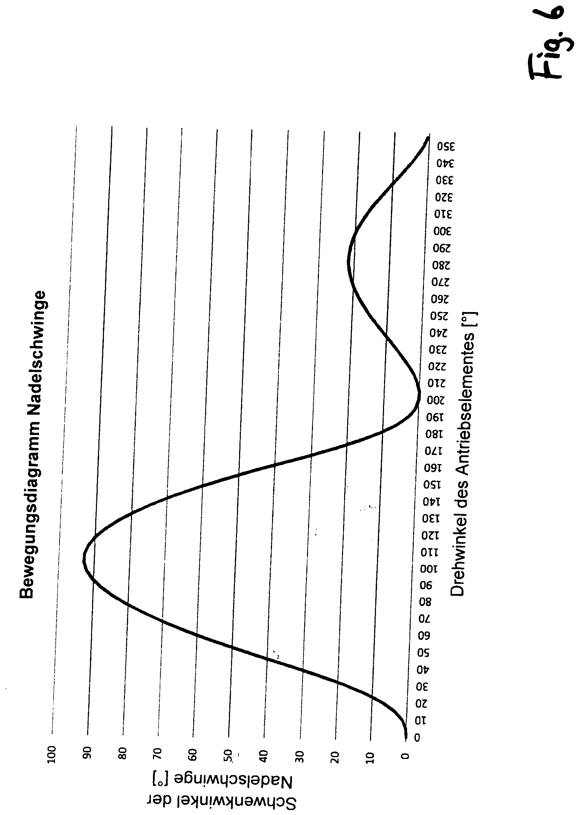

Folge davon ist, dass bei der Rückkehr der Nadelschwinge 12 in die Ausgangsstellung die Koppeleinrichtung 22, nachdem sie bei einem Drehwinkel des Antriebselementes 18 von weniger als 360° bereits gestreckt wurde, erneut zu einem geringeren Maße verkürzt wird. Dabei werden die Bindenadeln 14 nach Abschluss des Bindezyklus erneut zu einem Teil in den Presskanal 4 geführt, bevor die Ausgangsstellung der Nadelschwinge 12 wieder hergestellt ist. Dieser Bewegungsablauf der Nadelschwinge 12 wird durch das Bewegungsdiagramm in Fig. 6 dargestellt. Dabei ist sowohl der Schwenkwinkel der Nadelschwinge 12 als auch der Drehwinkel des Antriebschenkels 18 in der Ausgangsstellung gleich Null.

Fig. 7 zeigt einen Bindetisch der Ballenpresse 2 oberhalb des Presskanals 4. Außerdem sind Teile der drei Bindenadeln 14 dargestellt, die ein bandförmiges Bindematerial 40 führen, während sich die Nadelschwinge 12 im oberen Totpunkt befindet

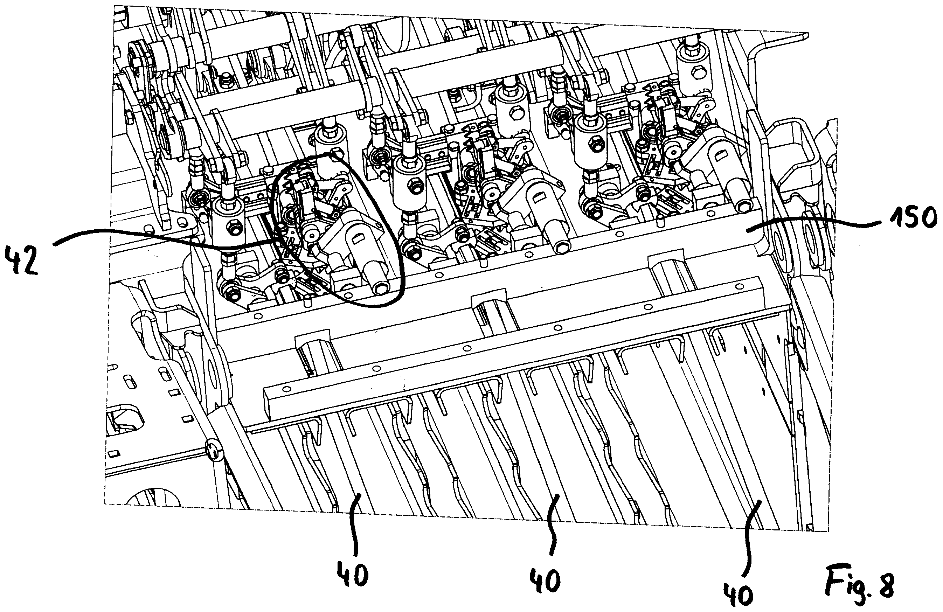

Fig. 8 zeigt eine weitere perspektivische Übersichtsdarstellung des Bindetisches mit drei Stoffschlusserzeugern 42 und den stoffschlüssig zu verbindenden bandförmigem Bindematerial 40. In dieser Darstellung befindet sich die nicht sichtbare Nadelschwinge 12 in der Ausgangsstellung und der Ballen wird durch den Presskolben 34 gepresst. Es ist ein Teil der Bindeeinrichtungen, welcher auf dem Bindetisch angeordnet ist, zwischen zwei Bindezyklen dargestellt.

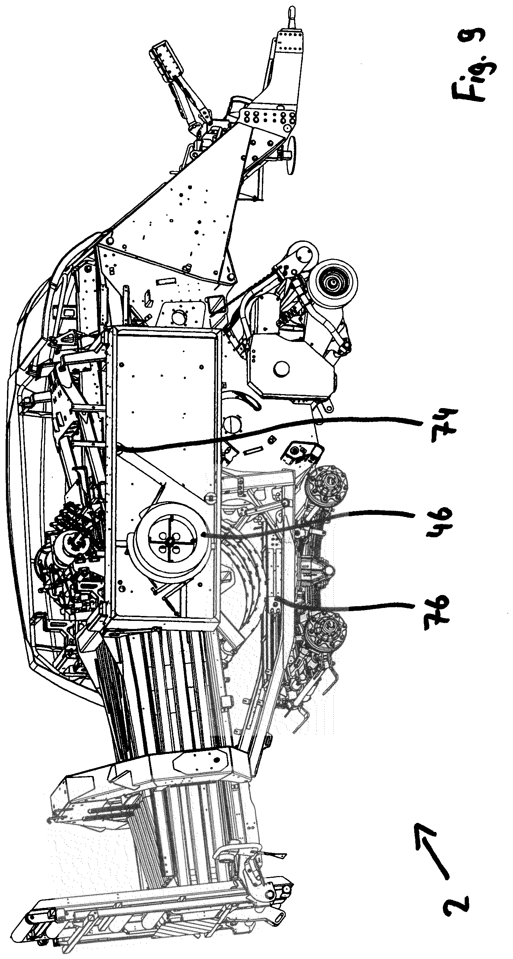

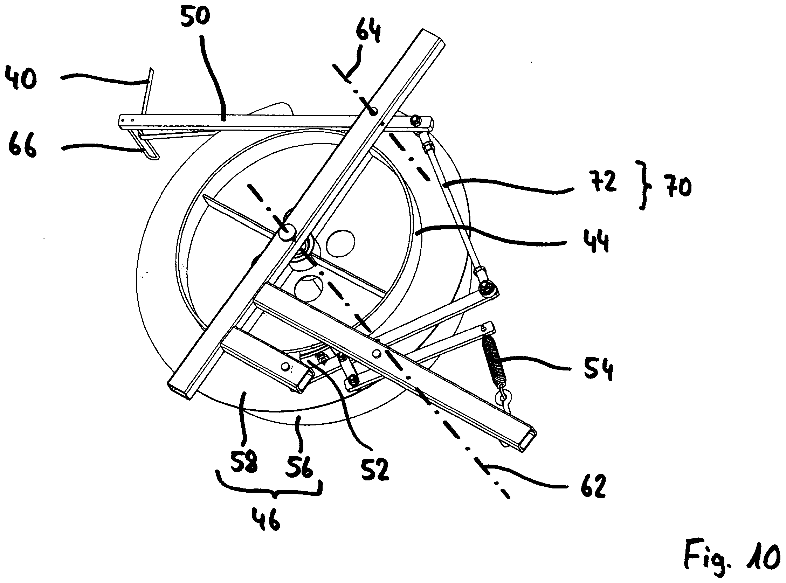

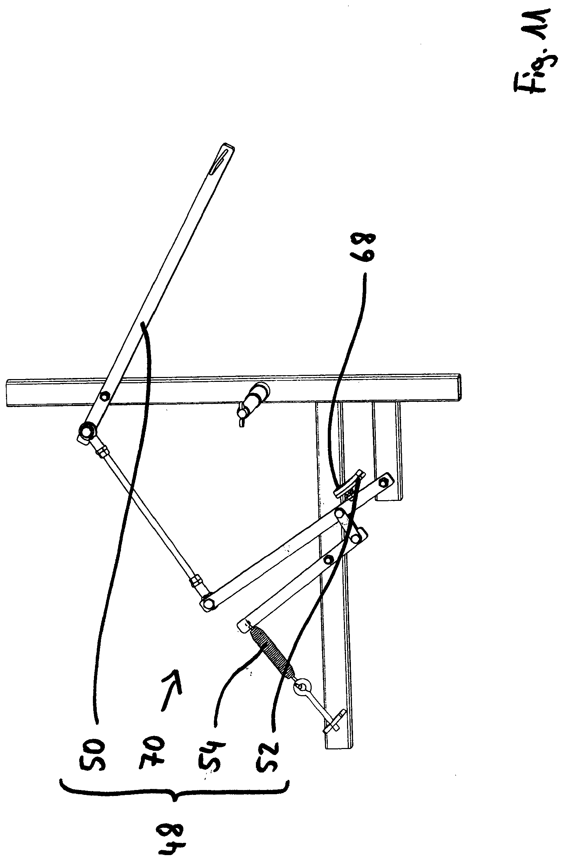

Fig. 9 ist eine Übersichtsdarstellung der erfindungsgemäßen Ballenpresse 2 und zeigt bezüglich der Fig. 1, 3, 4 und 5 ihre gegenüberliegende Seite. An dieser Seite angeordnet ist eine Abrolleinrichtung 46, die ein bandförmiges Bindematerial 40 zur Umhüllung der Ballen bevorratet. Weiterhin sind Teile einer Regeleinrichtung 48 dargestellt, die in den folgenden Fig. 10 und 11 detailliert dargestellt sind. Fig. 10 zeigt gegenüber Fig. 9 die Rückseite der Abrolleinrichtung 46 und der Regeleinrichtung 48. Die Abrolleinrichtung 46 weist eine wechselbare Bandrolle 56 und einen Bandrollenträger 58 auf. Die Abrolleinrichtung 46 ist um eine Abrolldrehachse, welche ortsfest gegenüber dem Presskanal 4 angeordnet ist, drehbar.

Die Abrolleinrichtung 46 weist eine Bremskontaktfläche 44 auf, die die Form einer Kreiszylindermantelfläche hat. In einer Bremsstellung, in der die Regeleinrichtung 48 in Fig. 10 dargestellt ist, liegt an der Bremskontaktfläche 44 ein Bremselement 52 mit einer Bremselementfläche 68 an, welches Teil der Regeleinrichtung 48 ist. Über eine Übertragungsvorrichtung 70 ist das Bremselement 52 mit einem Regelelement 50 verbunden. An dem Regelelement 50 ist ein Führungselement 66 angeordnet, das als Öse ausgebildet ist.

Durch dieses Führungselement 66 verläuft das bandförmige Bindematerial 40, nachdem es von der Abrolleinrichtung 46 abgerollt wurde. Eine Erhöhung der Bandspannung verursacht dabei ein Schwenken des Regelelementes 50 um eine Regelelementschwenkachse 64, die parallel zur Abrolldrehachse 62 positioniert ist. Diese Schwenkbewegung, die von der Übertragungsvorrichtung 70 untersetzt auf das Bremselement 52 übertragen wird, führt zu einem Lösen des Bremselementes 52 mit der Bremselementfläche 68 von der Bremskontaktfläche 44. Durch ein Bremsrückstellelement 54 wird die Übertragungsvorrichtung 70 mit einer entgegen dieser Bewegung wirkenden Kraft beaufschlagt. Bei Nachlassen der Bandspannung bewirkt das Bremsrückstellelement 54 eine Rückführung der Regeleinrichtung 48 in die Bremsstellung.

Zur Einstellung der Sensibilität der Regeleinrichtung 48 ist an das Regelelement 50 ein Steuerhebel 72 angeordnet, der längenverstellbar ist. Fig. 9 zeigt über die Abrolleinrichtung 46 und die Regeleinrichtung 48 hinaus ein Umlenkelement 74, das einen Teil des bandförmigen Bindematerials 40 nach Durchlaufen des Führungselementes 66 umlenkt.

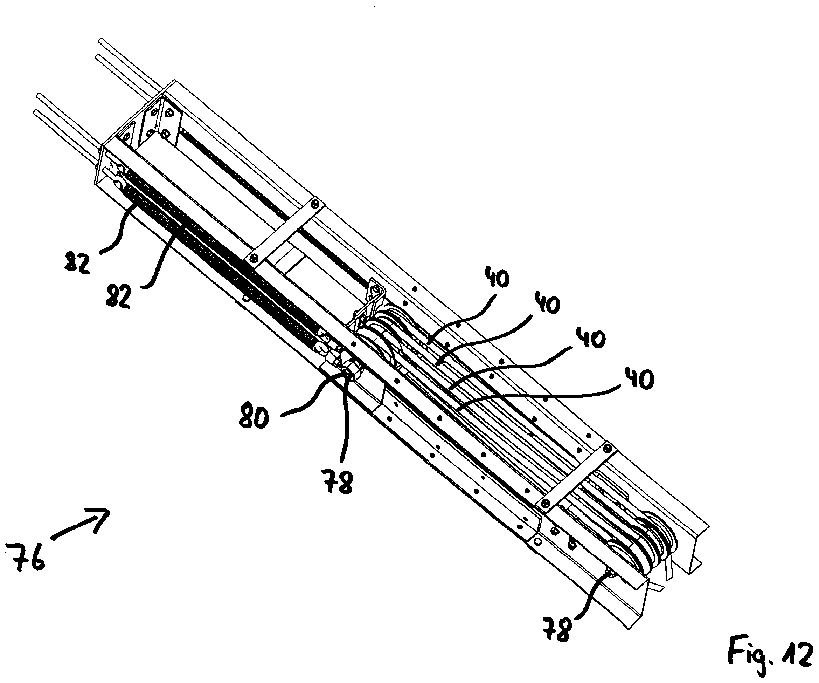

Fig. 9 zeigt unterhalb des Presskanals 4 einen Bandspeicher 76, dem das bandförmige Bindematerial 40, nachdem es von der Abrolleinrichtung 46 abgerollt wurde, zugeführt wird. Dieser Bandspeicher 76 ist in Fig. 12 im Detail dargestellt.

Der Bandspeicher 76 hat zwei Bandspeicherachskörper 78. Auf dem Freiachskörper sind vier, auf dem weiteren Bandspeicherachskörper fünf Rollen angeordnet. Das Bindematerial 40, welches sich zwischen Abrolleinrichtung 46 und Stoffschlusserzeuger 42 befindet, umwickelt die Rollen der Bandspeicherachskörper 78 nach Art eines Flaschenzuges. Dabei umschlingt das bandförmige Bindematerial 40 abwechselnd und jeweils halbseitig den Umfang der Rollen der unterschiedlichen Bandspeicherachskörper 78. Einer der Bandspeicherachskörper 78 ist ein beweglich gelagerter Freiachskörper 80. Dieser wird durch ein Bandspeicherrückstellelement 82 mit einer Kraft beaufschlagt, die eine den Abstand der beiden Bandspeicherachskörper 78 voneinander vergrößernde Bewegung bewirkt. Durch die Vergrößerung des Abstandes vergrößert sich die von Bandspeicher 76 gespeicherte Länge des bandförmigen Bindematerials 40 um ein Vielfaches der Differenz der Abstände der Bandspeicherachskörper 78 vor und nach der Abstandsvergrößerung.

Haben die Bandspeicherrückstellelemente 82 den Abstand der beiden Bandspeicherachskörper 78 allmählich zwischen zwei Bindezyklen erhöht, stellt der Bandspeicher 76 die Menge an bandförmigem Bindematerial 40 bereit, die für eine Bewegung der zugeordneten Bindenadeln 14 an der Nadelschwinge 12 von ihrer Ausgangsstellung bis in den oberen Totpunkt zum Führen des Bindematerials an den Bindetisch erforderlich ist. Gleichzeitig verhindert der Bandspeicher 76 große Beschleunigungen der Abrolleinrichtung 46, da durch die Bandspeicherrückstellelemente 82 das bandförmige Bindematerial 40 nur mit einer moderaten Bandspannung, welche die Regeleinrichtung 48 bewegt, allmählich von der Abrolleinrichtung 46 abgerollt wird.

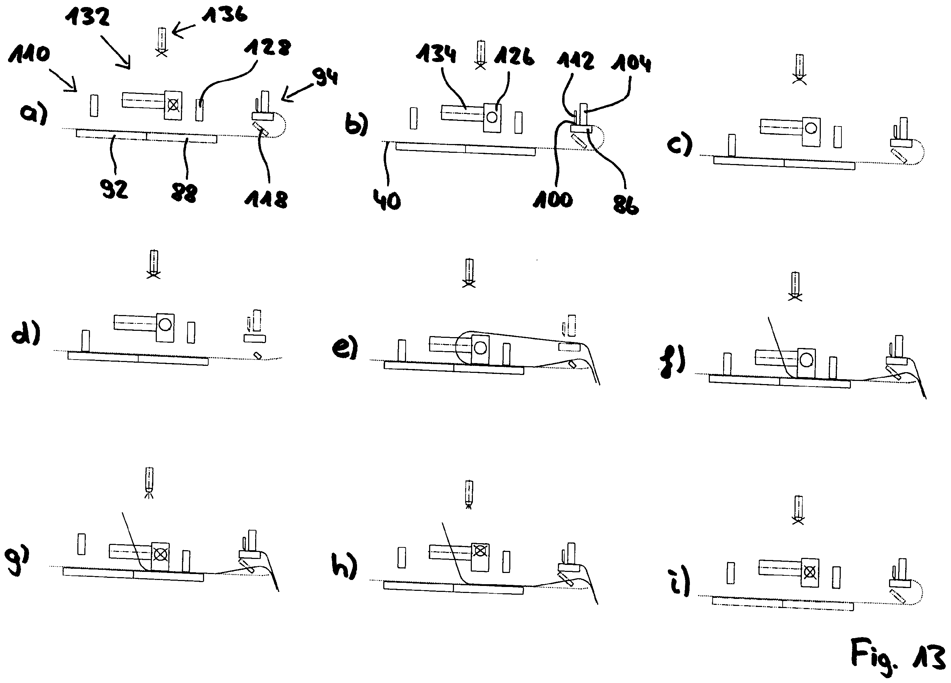

Fig. 13 zeigt eine Serie von Prinzipdarstellungen, die den Ablauf eines Bindezyklus und die Funktion der auf dem Bindetisch angeordneten Komponenten verdeutlicht. Dargestellt sind jeweils eine vordere Klemmvorrichtung 94, eine Schneidvorrichtung 100, ein Gegenhalter 86, ein Niederhalter 118, ein Schwenkelement 88 und ein Gegenschwenkelement 92, eine hintere Klemmvorrichtung 110, eine Reibschweißeinrichtung 132 mit einer Schweißklemmeinrichtung 128 sowie eine Düse 136 der Kühlungseinrichtung.

In den neun Figurteilen 13a bis 13i dargestellt werden jeweils die genannten Komponenten einer Bindeeinrichtung auf dem Bindetisch. Dabei befindet sich gemäß der Darstellungen der Presskolben 34 der Ballenpresse 2 rechts von den dargestellten Komponenten und die Öffnung des Presskanals 4, durch die die gepressten Ballen diesen verlassen, links davon. Ein erstes Ende des bandförmigen Bindematerials 40 ist mit einer gestrichelten Linie, ein weiterer Teil davon mit einer durchgezogenen Linie dargestellt.

Fig. 13a zeigt eine Ausgangsposition der Bindeeinrichtung, in der das bandförmige Bindematerial 40 von der vorderen Klemmvorrichtung 94 geklemmt ist. In dieser Ausgangsposition umschlingt das bandförmige Bindematerial 40 den Gegenhalter 86 U-förmig und erstreckt sich im weiteren Verlauf in Richtung der hinteren oberen Querkante des gepressten Ballens. In dieser Position befinden sich die weiteren dargestellten Komponenten in vom bandförmigen Bindematerial 40 beabstandeten Positionen.

Fig. 13b zeigt, dass das Schwenkelement 88 und das Gegenschwenkelement 92 zu Beginn des Bindezyklus in die dargestellte Bandebene verschwenkt werden. Zuvor (vgl. Fig. 13a) befanden sie sich außerhalb einer Bandebene, in der die Bindeeinrichtung für diese Darstellungen geschnitten ist. Gleichzeitig mit dem Verschwenken des Schwenkelementes 88 und des Gegenschwenkeklementes 92 wird die Reibschweißeinrichtung 132 aktiviert. Dazu wird die Luftzufuhr zu einem die Reibschweißeinrichtung 132 antreibenden Druckluftmotor 134 aktiviert.

Fig. 13c zeigt in einem folgenden Schritt die hintere Klemmvorrichtung 110 abgesenkt und dass sie das bandförmige Bindematerial 40 auf dem Gegenschwenkelement 92 einklemmt. Das ermöglicht, dass sich die vordere Klemmvorrichtung 94 in einem folgenden Schritt (vgl. Fig. 13d) öffnen kann, ohne dass die Festlegung des den Ballen umschlingenden Teils des bandförmigen Bindematerials 40 beeinträchtigt wird. Gleichzeitig mit der Öffnung der vorderen Klemmvorrichtung 94 schwenkt ein Niederhalter 118 in die dargestellte Bandebene. Dieser stellt sicher, dass der rechts von der hinteren Klemmvorrichtung 110 liegende Bandabschnitt unterhalb der Reibschweißeinrichtung 132 angeordnet bleibt.

Fig. 13e zeigt darauf folgend einen weiteren schlaufenförmigen Bandabschnitt (als durchgezogene Linie dargestellt) desselben Bindematerials, den eine Bindenadel 14 durch den Presskanal 4 in den prinzipiell dargestellten Bereich des Bindetisches führt. Der Gegenhalter 86 weicht, ermöglicht durch die Öffnung der vorderen Klemmvorrichtung 94, dem Bindematerial zeitweilig aus und befindet sich dabei aus der dargestellten Bandebene verlagert. Während die Nadelschwinge 12 im Bereich des oberen Totpunktes liegt, schließt sich die Reibschweißeinrichtung 132 und mit ihr die Schweißklemmeinrichtung 128. Daraufhin liegt das bandförmige Bindematerial 40 zweilagig zwischen der Reibschweißeinrichtung 132 bzw. der Schweißklemmeinrichtung 128 und dem Schwenkelement 88. Sobald Kontakt zwischen beiden geklemmten Lagen und der Reibschweißeinrichtung 132 hergestellt ist, beginnt aufgrund der bereits erfolgten Aktivierung des Druckluftmotors 134, der die Reibschweißeinrichtung 132 antreibt, der Schweißvorgang.

Fig. 13f zeigt, dass der Schweißvorgang bis zu diesem nächsten Schritt andauert. Die Bindenadel 14 hat den Bereich des Bindetisches verlassen, dabei hat der Gegenhalter 86 die zuvor von der Bindenadel 14 geführte Schlaufe des Bindematerials 40 nach seiner Rückverlagerung in die Bandebene gefangen. Daraufhin wird die vordere Klemmvorrichtung 94 und damit, jedoch der Klemmenbewegung nacheilend, die Schneidvorrichtung 100 geschlossen. Somit wird die Schlaufe des bandförmigen Bindematerials 40 zwischen Reibschweißeinrichtung 132 und vorderer Klemmvorrichtung 94 getrennt. Der Teil des bandförmigen Bindematerials 40, dessen Enden unter der Schweißklemmeinrichtung 128 liegen, umhüllt den fertig gepressten Ballen. Der mit einer durchgezogenen Linie dargestellte Bandabschnitt wird während des andauernden Schweißvorgangs durch die geschlossene Schweißklemmeinrichtung 128 fixiert.

Fig. 13g zeigt die Komponenten der Bindeeinrichtung, nachdem die Reibschweißeinrichtung 132 gestoppt wurde. Sie bleibt dabei, ebenso wie die Schweißklemmeinrichtung 128, geschlossen. Die Druckluft, die zuvor dem Druckluftmotor 134 für die Reibschweißeinrichtung 132 zugeführt wurde, wird nun der Düse 136 zugeführt, die die Schweißverbindung kühlt. Geschlossen bleiben die Reibschweißeinrichtung 132 und die Schweißklemmeinrichtung 128, weil dadurch eine Relativbewegung der noch heißen verschweißten Bandabschnitte verhindert wird. Fig. 13g zeigt außerdem, dass die hintere Klemmvorrichtung 110 geöffnet wird.

Fig. 13h zeigt die gleichen Komponenten, nachdem sich die Reibschweißeinrichtung 132 und die Schweißklemmeinrichtung 128 geöffnet haben. Die Enden des den Ballen umhüllenden bandförmigen Bindematerials 40 halten aufgrund der hergestellten und gekühlten stoffschlüssigen Verbindung aneinander. Durch die Kühlung wird die zum Erkalten der Schweißstelle benötigte Zeit reduziert. Damit ist der gepresste Ballen stoffschlüssig umschlungen. Im Folgenden (vgl. Fig. 13i) werden das Schwenkelement 88 und das Gegenschwenkelement 92 aus der dargestellten Bandebene herausgeschwenkt. Dadurch liegen sie nicht mehr zwischen dem den Ballen umhüllenden bandförmigen Bindematerial 40 und dem landwirtschaftlichen Erntegut und der umhüllte Ballen kann aus dem Presskanal 4 formstabil ausgebracht werden.

Beim Schwenken des Schwenkelementes 88 und des Gegenschwenkelementes 92 wird außerdem die Luftzufuhr, welche zuletzt zu der Düse 136 geführt wurde, beendet. Der Abschnitt des bandförmigen Bindematerials 40, der nach dem Schließen der Schneidvorrichtung 100 (vgl. Fig. 13f) durch die vordere Klemmvorrichtung 94 geklemmt wird, erstreckt sich entsprechend des gestrichelt dargestellten Bandabschnitts in Fig. 13a. Dabei wird dieser Abschnitt mit wachsender Länge des zu pressenden Ballens zu einem wachsenden Winkel von dem Gegenhalter 86 umgelenkt, bis er sich bei Erreichen einer maximalen Ballenlänge U-förmig an den Gegenhalter 86 anlegt. Wird ein erneuter Bindezyklus ausgelöst, finden die dargestellten Schritte des Bindezyklus erneut wie beschrieben statt.

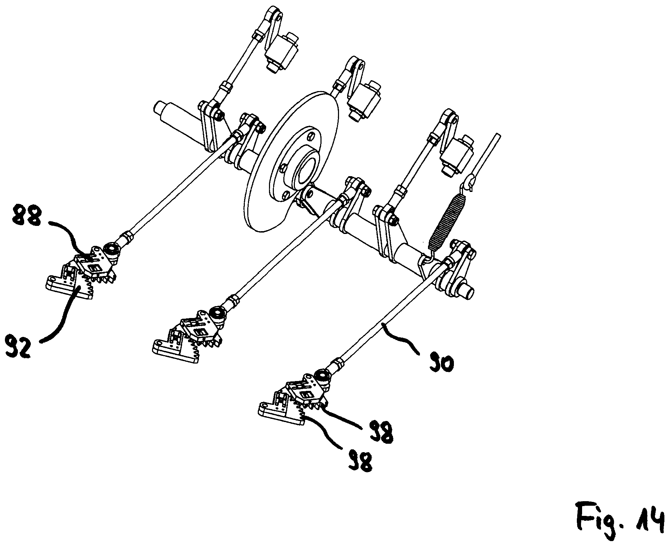

Die folgenden Fig. 14 bis 23 zeigen die in Fig. 13 symbolisch dargestellten Komponenten der Bindeeinrichtung in Übersichtsdarstellungen. Fig. 14 zeigt drei Schwenkelemente 88 und drei Gegenschwenkelemente 92. Jedes Schwenkelementpaar, bestehend aus einem Schwenkelement 88 und einem Gegenschwenkelement 92, ist dabei einer Bindeeinrichtung zugeordnet. Entsprechend der Beschreibung des Bindezyklus sind die Schwenkelementpaare zwischen bandförmigem Bindematerial 40 und den zu pressenden Ballen einbringbar und auf dem Bindetisch positioniert. Am Schwenkelement 88 ist ein Schwenkelementsteuerhebel 90 angelenkt. Das Schwenkelement 88 schwenkt um eine Schwenkachse, die in einer Schwenkachsenebene liegt, zu welcher die Längsmittelachse des Presskanals 60 orthogonal positioniert ist. Das Gegenschwenkelement 92 ist jeweils um eine parallele Schwenkachse, die in Richtung der Längsmittelachse des Presskanals von der ersten Schwenkachse beabstandet ist, schwenkbar. Übertragen wird die Schwenkbewegung vom Schwenkelement 88 auf das Gegenschwenkelement 92 durch Teilzahnkreise, die sowohl die Schwenkelemente 88 als auch die Gegenschwenkelemente 92 aufweisen. Die Teilzahnkreise 98 von Schwenkelement 88 und Gegenschwenkelement 92 befinden sich jeweils im Eingriff, so dass eine Schwenkbewegung des Schwenkelements 88 eine äquivalente Schwenkbewegung des Gegenschwenkelements 92 verursacht.

Fig. 14 zeigt außerdem eine Hebelwelle, an die der Schwenkelementsteuerhebel 90 angeordnet ist. Eine Schwenkbewegung dieser Hebelwelle wird durch eine dargestellte und auf der Steuerwelle 38 befestigte Kurvenscheibe geführt. Neben der Bewegung der Schwenkelementpaare wird durch die dargestellte Hebelwelle ein Druckluftventil 144 gesteuert, welches die Luftzufuhr zum Druckluftmotor 134 bzw. zur Düse 136 regelt. Die Hebelwelle wird durch eine Spiralfeder gegen die Kurvenscheibe zurückgestellt.

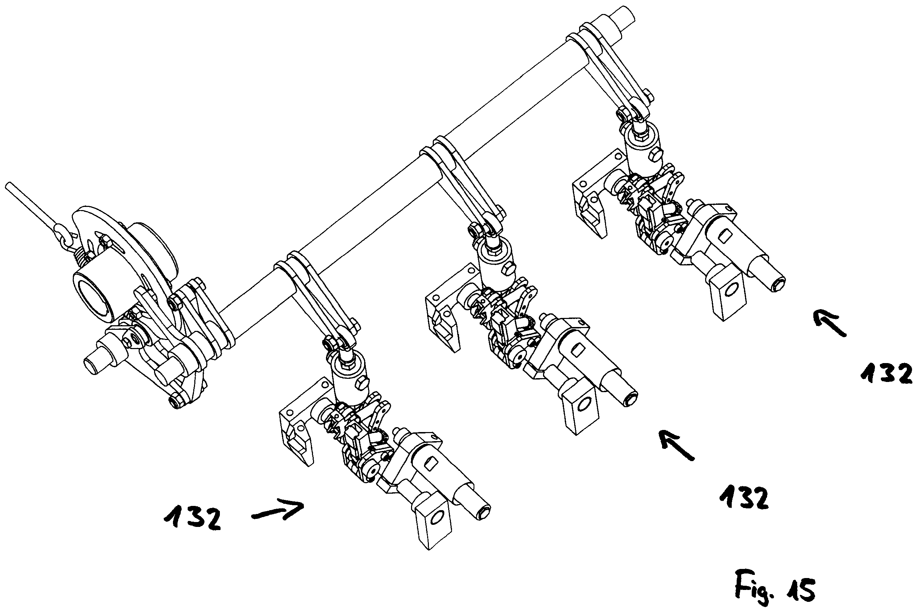

Fig. 15 zeigt drei Reibschweißeinrichtungen 132, die jeweils einer Bindeeinrichtung zugeordnet sind. Dargestellt jeweils der zugeordnete Druckluftmotor 134, ein das zu verschweißende Bindematerial während des Schweißvorgangs kontaktierendes Schweißelement 126 sowie die Schweißklemmeinrichtung 128. Diese Komponenten sind schwenkbar um eine Schweißeinrichtungsschwenkachse 130 am Bindetisch befestigt.

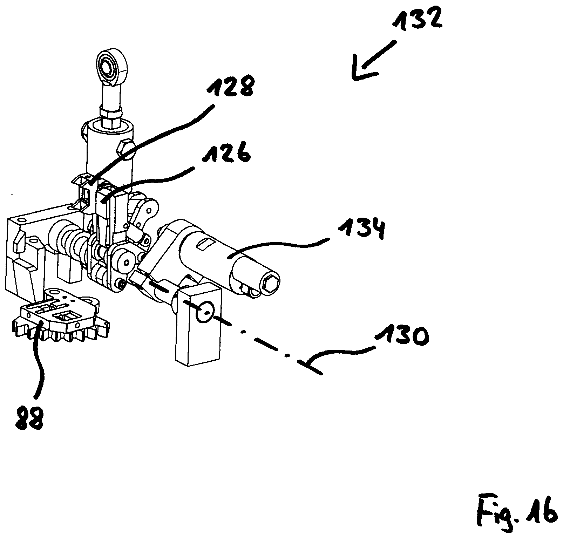

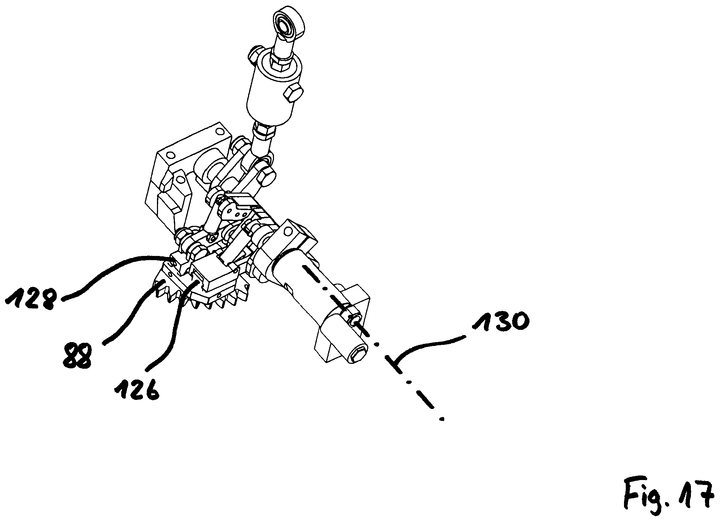

Die Fig. 16 und 17 zeigen jeweils die Reibschweißeinrichtung 132 gemeinsam mit dem Schwenkelement 88, welches zwischen bandförmigem Bindematerial 40 und Ballen geschwenkt ist. In einer geöffneten Stellung der Reibschweißeinrichtung 132 (vgl. Fig. 16) haben diese beiden Komponenten keine Wirkung aufeinander, unabhängig davon, ob der Druckluftmotor 134 aktiviert ist oder nicht. Vom Betrieb des Druckluftmotors 134 hängt ausschließlich die hochfrequente Bewegung des Schweißelements 126 ab.

Fig. 17 zeigt wiederum die Reibschweißeinrichtung 132 und das Schwenkelement 88, wobei in diesem Fall die Reibschweißeinrichtung 132 geschlossen ist. Das bandförmige Bindematerial 40, was sich in einem Bindezyklus bei dieser Position der Reibschweißeinrichtung 132 zwischen eben dieser Reibschweißeinrichtung 132 und dem Schwenkelement 88 befindet, ist nicht dargestellt.

Ausgelöst wird auch diese Schwenkbewegung der Reibschweißeinrichtung 132 von einem Hebel, der an einer Hebelwelle angeordnet ist, dessen Bewegung wiederum von einer Kurvenscheibe geführt wird (vgl. Fig. 15). Das Schweißelement 126 sowie die Schweißklemmeinrichtung 128 werden hierdurch mechanisch geführt. Um eine Überbeanspruchung dieser Bauteile beim Klemmen bzw. Schweißen zu vermeiden, sind Überlastsicherungen in Form von Federpaketen vorgesehen. Eine Überlastsicherung ist zwischen Hebelwelle und Reibschweißeinrichtung 132 angeordnet. Dem Schweißelement 126 und der Schweißklemmeinrichtung 128 sind jeweils noch zusätzlich eigene Überlastsicherungen zugeordnete. Diese dienen neben der Überlastsicherung auch zur Feineinstellung des Anpressdrucks des Schweißelements 126 und der Klemmkraft der Schweißklemmeinrichtung 128, die somit unabhängig voneinander erfolgen kann.

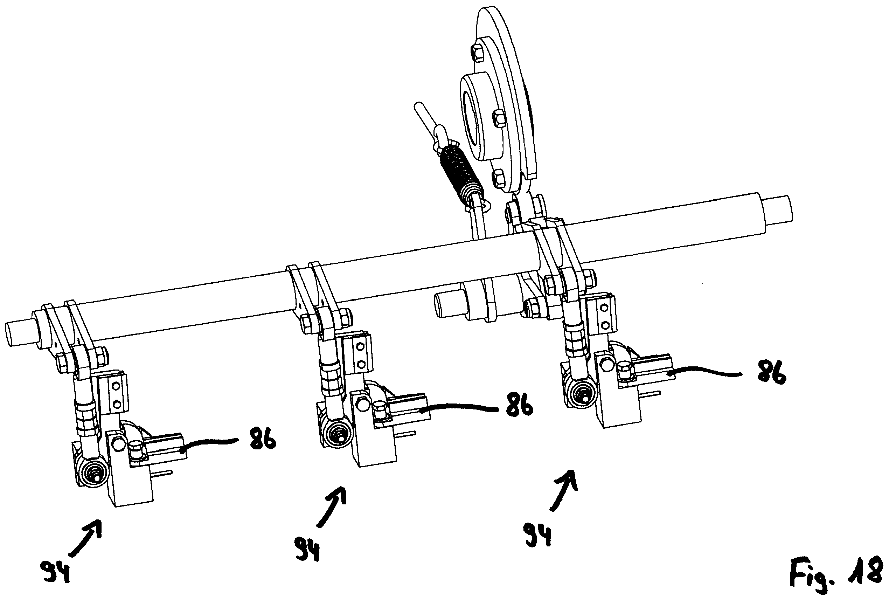

Die Fig. 18 bis 21 zeigen die vordere Klemmvorrichtung 94. Weiterhin dargestellt sind der Gegenhalter 86, der Niederhalter 118, ein Klemmarm 104 und ein Schneidarm 112. Gemäß der Beschreibung eines Bindezyklus (vgl. Fig. 13) klemmt die vordere Klemmvorrichtung 94 das bandförmige Bindematerial 40 in der Ausgangsposition der Bindeeinrichtung.

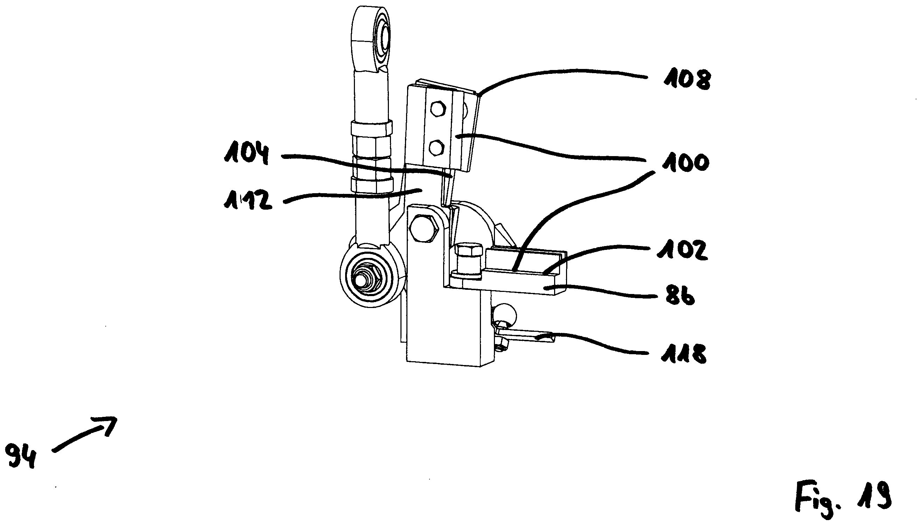

Der Gegenhalter 86 ist um eine Gegenhalterschwenkachse 96 schwenkbar gegenüber dem Bindetisch gelagert. Fig. 19 zeigt den Gegenhalter 86, welcher im oberen Bereich eine Gegenschneide 102 und einen zu einer Fixieranordnung 106 gehörenden Vorsprung 108 aufweist, in einer Gegenhalteposition. Die vordere Klemmvorrichtung 94 mit ihrem Klemmarm 104 und die Schneidvorrichtung 100 mit ihrem Schneidarm 112 sind geöffnet. Der Niederhalter 118, der um eine Niederhalterschwenkachse 120 in einem Anschlagpunkt 122 gegenüber dem Bindetisch schwenkbar in einem Anschlagpunkt gelagert ist, ist ausgeklappt.

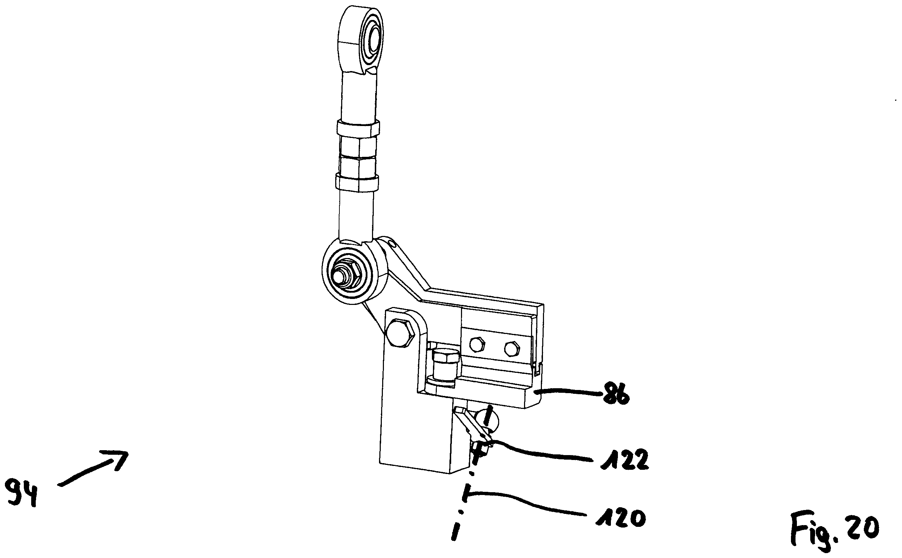

Fig. 20 zeigt den Gegenhalter 86 wiederum in der Gegenhalteposition und die vordere Klemmvorrichtung 94 in einer Klemmstellung. In dieser Klemmstellung klemmt sie das bandförmige Bindematerial 40 während sich die Bindeeinrichtung in der Ausgangsposition befindet. Dabei greift ein Vorsprung 108 des Klemmarms 104 in eine Aussparung und der beim Schließen der vorderen Klemmvorrichtung 94 nacheilende Schneidarm 112 schneidet das bandförmige Bindematerial 40 bei bestehender Klemmung durch Zusammenwirken der am Schneidarm 112 angeordneten Schneide mit einer Gegenschneide 102. Der Niederhalter 118 wird beim Schließen der vorderen Klemmvorrichtung 94 und der Schneidvorrichtung 100 eingeklappt.

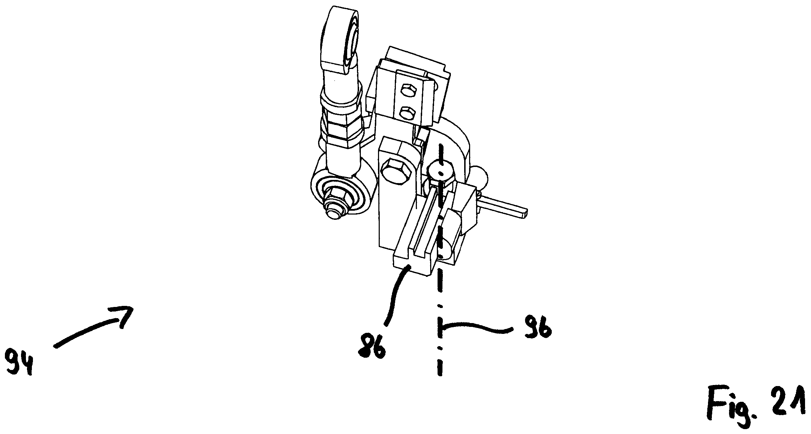

Fig. 21 zeigt den Gegenhalter 86 in einer Ausweichposition, in der er der durch die Bindenadel 14 zugeführten Schlaufe des bandförmigen Bindematerials 40 ausweicht. Ein nicht dargestelltes Federelement stellt den Gegenhalter 86 bei ausbleibender Krafteinwirkung durch das bandförmige Bindematerial 40 in die Gegenhalteposition zurück.

An der vorderen Klemmvorrichtung 94 ist ein Hebel angeordnet, welcher wiederum an einer Hebelwelle angeordnet ist, dessen Schwenkbewegung durch eine Kurvenscheibe geführt wird.

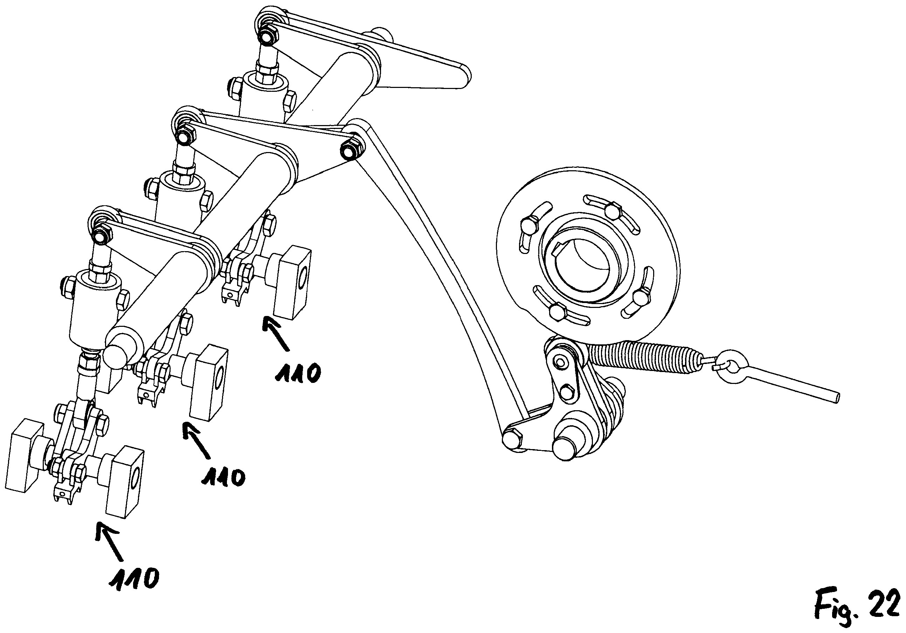

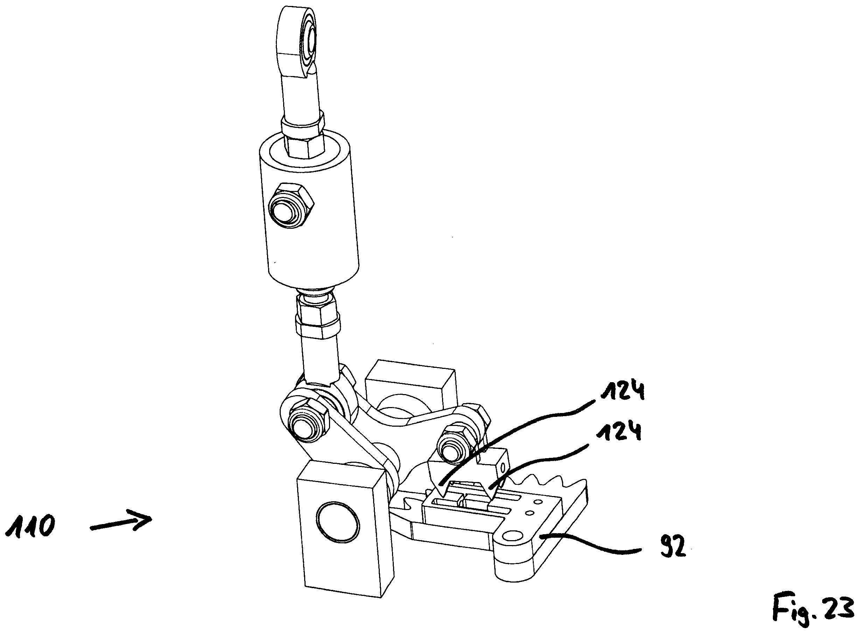

Fig. 22 und Fig. 23 zeigen die hintere Klemmvorrichtung 110. Diese befindet sich in Fahrtrichtung der Ballenpresse 2 hinter der Reibschweißeinrichtung 132 und klemmt das bandförmige Bindematerial 40 in einer Klemmposition auf dem Gegenschwenkelement 92 fest. Zur Sicherstellung einer optimalen Ausrichtung des bandförmigen Bindematerials 40 gegenüber dem Schweißelement 126 verfügt die hintere Klemmvorrichtung 110 über Fangzähne 124. Diese Fangzähne 124 umfassen in der Klemmposition das bandförmige Bindematerial 40 und zentrieren es. Dazu verfügt das in Fig. 23 dargestellte Gegenschwenkelement 92 über den Fangzähnen 124 gegenüberliegende Ausnehmungen.

Auch die hintere Klemmvorrichtung 110 wird über einen Hebel, eine Hebelwelle und eine Kurvenscheibe, die auf der Steuerwelle 38 angeordnet ist, gesteuert. Hier ist wiederum eine Überlastsicherung in Form eines Federpaketes zwischen Hebelwelle und hinterer Klemmvorrichtung 110 vorgesehen. Die Überlastsicherung ist auch zur Feineinstellung der Klemmkraft der hinteren Klemmvorrichtung 110 nutzbar.

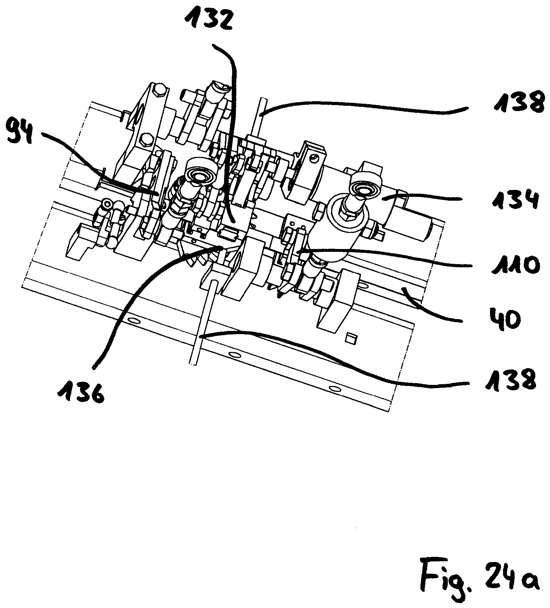

Fig. 24a zeigt die vordere Klemmvorrichtung 94, die hintere Klemmvorrichtung 110 sowie die Reibschweißeinrichtung 132 auf dem Bindetisch. Zusätzlich sind zwei Zuführelemente 138 dargestellt, die Teil der Luftkühlungseinrichtung sind. An ihrem dem bandförmigen Bindematerial 40 zugewandten Ende befindet sich jeweils eine Düse 136. Durch Zuführelement 138 und Düse 136 gelangt ein Luftstrom an die unter dem Schweißelement 126 liegenden Abschnitte des bandförmigen Bindematerials 40, wodurch das Erkalten der Schweißstelle beschleunigt wird.

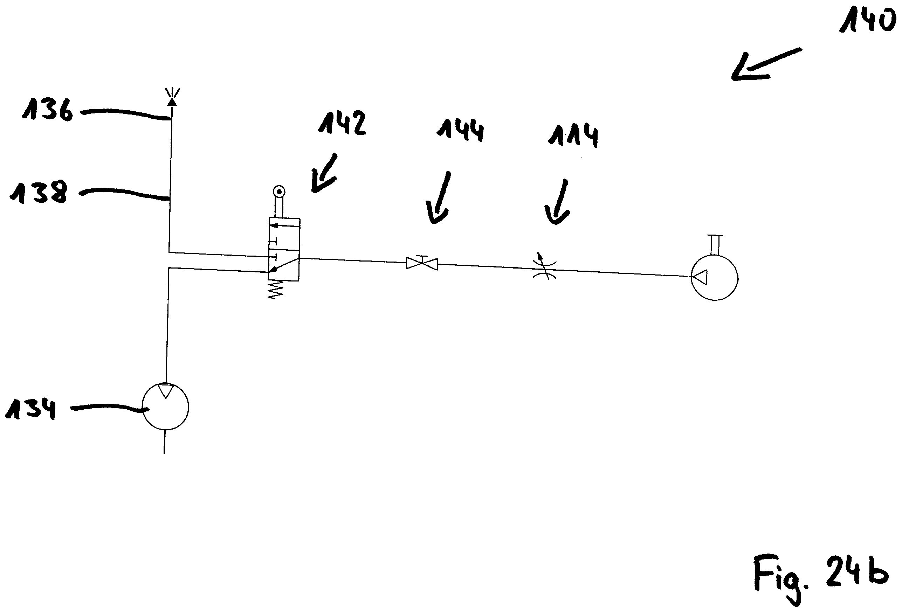

Fig. 24b zeigt einen Schaltplan der Kühleinrichtung. Die dadurch symbolisch dargestellte Regelvorrichtung 140 umfasst ein Druckluftventil 144 und ein Umschaltventil 142. Das Umschaltventil 142 kann einen Druckluftstrom zum Druckluftmotor 134 und nach Beenden des Schweißens über das Zuführelement 138 der Düse 136 zuführen.

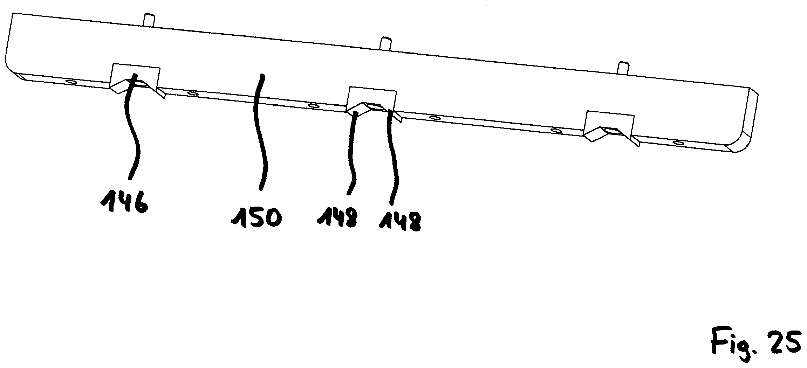

Fig. 25 zeigt drei Bandführungselemente 146, die jeweils einer Bindeeinrichtung zugeordnet sind. Die Bandführungselemente 146 sind einstellbar an einem Führungsträgerelement 150 angeordnet. Die Bandführungselemente 146 verfügen jeweils über zwei Führungsabsätze 148, die bei Anliegen des bandförmigen Bindematerials 40 für eine Zentrierung dieses sorgen. Durch die Bandführungselemente 146 wird die Ausrichtung der unteren der beiden zu verschweißenden Lagen des bandförmigen Bindematerials 40 sichergestellt. Fig. 8 zeigt, dass das Führungsträgerelement 150 dazu hinter der hinteren Klemmvorrichtung 110 auf dem Bindetisch angeordnet ist.

### Bezugsziffernliste:

- 2: Ballenpresse
- 4: Presskanal
- 8: Schwingenschwenkachse
- 10: Antriebsanordnung
- 12: Nadelschwinge
- 14: Bindenadel
- 16: Antriebsdrehachse
- 18: Antriebselement
- 20: Antriebshebel
- 22: Koppeleinrichtung
- 24: Koppelschwenkachse
- 26: erster Koppelhebel
- 28: weitere Koppelhebel
- 30: Antriebshebeldrehachse
- 32: Antriebskoppelschwenkachse
- 34: Presskolben
- 36: Führungsrolle
- 38: Steuerwelle
- 40: Bandförmiges Bindematerial
- 42: Stoffschlusserzeuger
- 44: Bremskontaktfläche
- 46: Abrolleinrichtung
- 48: Regeleinrichtung
- 50: Regelelement
- 52: Bremselement
- 54: Bremsrückstellelement
- 56: Bandrolle
- 58: Bandrollenträger
- 60: Längsmittelachse des Presskanals
- 62: Abrolldrehachse
- 64: Regelelementschwenkachse
- 66: Führungselement
- 68: Bremselementfläche
- 70: Übertragungsvorrichtung
- 72: Steuerhebel
- 74: Umlenkelement
- 76: Bandspeicher
- 78: Bandspeicherachskörper
- 80: Freiachskörper
- 82: Bandspeicherrückstellelement
- 86: Gegenhalter
- 88: Schwenkelement
- 90: Schwenkelementsteuerhebel
- 92: Gegenschwenkelement
- 94: Vordere Klemmvorrichtung
- 96: Gegenhalterschwenkachse
- 98: Teilzahnkreis
- 100: Schneidvorrichtung
- 102: Gegenschneide
- 104: Klemmarm
- 106: Fixieranordnung
- 108: Vorsprung
- 110: Hintere Klemmvorrichtung
- 112: Schneidarm
- 114: Drossel
- 118: Niederhalter
- 120: Niederhalterschwenkachse
- 122: Anschlagspunkt
- 124: Fangzähne
- 126: Schweißelement
- 128: Schweißklemmeinrichtung
- 130: Schweißeinrichtungsschwenkachse
- 132: Reibschweißeinrichtung
- 134: Druckluftmotor
- 136: Düse
- 138: Zuführelement
- 140: Regelvorrichtung
- 142: Umschaltventil
- 144: Druckluftventil
- 146: Bandführungselement
- 148: Führungsabsatz
- 150: Führungsträgerelement

## Patentansprüche

1. Ballenpresse (2) für landwirtschaftliches Erntegut mit einem Presskanal (4) und mit einer um eine Schwingenschwenkachse (8), die in einer zu einer Längsmittelachse des Presskanals (60) orthogonalen Schwingenschwenkachsenebene angeordnet ist, schwenkbar gelagerten und von mindestens einer Antriebsanordnung (10) angetriebenen Nadelschwinge (12), welche mindestens eine durch Schwenkung der Nadelschwinge (12) durch den Presskanal (4) bewegliche Bindenadel (14) aufweist, wobei die wenigstens eine Antriebsanordnung (10) ein um eine Antriebsdrehachse (16) drehbar gelagertes Antriebselement (18) und einen exzentrisch daran angeordneten Antriebshebel (20) umfasst, wobei der Antriebshebel (20) um eine zur Antriebsdrehachse (16) parallele Antriebshebeldrehachse (30) schwenkbar ist, wobei die Antriebsanordnung (10) eine Koppeleinrichtung (22) aufweist, welche um eine ortsfest gegenüber dem Presskanal (4) positionierte Koppelschwenkachse (24) schwenkbar angeordnet ist, wobei die Koppeleinrichtung (22) von der Schwingenschwenkachse (8) der Nadelschwinge (12) beabstandet an der Nadelschwinge (12) angeordnet ist wobei der Antriebshebel (20) an der Koppeleinrichtung (22) angeordnet ist, wobei die Schwingenschwenkachse (8), die Antriebsdrehachse (16), die Koppelschwenkachse (24) und die Antriebshebeldrehachse (30) parallel und jeweils beabstandet zueinander angeordnet sind, wobei die Koppeleinrichtung (22) einen ersten Koppelhebel (26) und zumindest einen weiteren Koppelhebel (28) umfasst, wobei der erste Koppelhebel (26) mit dem weiteren Koppelhebel (28) beweglich verbunden ist, wobei der erste Koppelhebel (26) um die Koppelschwenkachse (24) schwenkbar angeordnet ist und wobei der um die Antriebshebeldrehachse (30) schwenkbare Antriebshebel (20) an dem ersten Koppelhebel (26) angelenkt ist.

2. Ballenpresse (2) nach Anspruch 1, **dadurch gekennzeichnet, dass** die Ballenpresse (2) die wenigstens eine Antriebsanordnung (10) auf einer Seite des Presskanals (4) umfasst.

3. Ballenpresse (2) nach Anspruch 1, **dadurch gekennzeichnet, dass** die Ballenpresse (2) an zwei gegenüberliegenden Seiten des Presskanals (4) je eine Antriebsanordnung (10) umfasst.

4. Ballenpresse nach einem der vorhergehenden Ansprüche, **dadurch gekennzeichnet, dass** die Schwenkachsen aller von der Koppeleinrichtung (22) umfassten Gelenke parallel zur Schwingenschwenkachse (8) positioniert sind.

5. Ballenpresse (2) nach einem der vorhergehenden Ansprüche, **dadurch gekennzeichnet, dass** die zur Antriebsdrehachse (16) parallele Antriebshebeldrehachse (30), um die der Antriebshebel (20) drehbar am Antriebselement (18) angeordnet ist, in einer Ausgangsstellung, in der sich die Nadelschwinge (12) vor und nach einem eine Ballenbindung abschließenden Nadelschwingenzyklus befindet, aus einer Koppelebene verlagert ist, in der die Antriebsdrehachse (16) und eine Antriebskoppelschwenkachse (32) liegen, um die der Antriebshebel (20) schwenkbar an dem ersten Koppelhebel (26) angeordnet ist.

6. Ballenpresse (2) nach Anspruch 5,
**dadurch gekennzeichnet, dass** die Antriebsdrehachse (16) und die Antriebshebeldrehachse (30) in einer Triebebene liegen, die in einer Ausgangsstellung um 30° bis 90° gegenüber der Koppelebene geneigt positioniert ist.

7. Ballenpresse (2) nach Anspruch 5 oder 6,
**dadurch gekennzeichnet, dass** eine in Bezug auf den Presskanal (4) ortsfest angeordnete Anlenkstelle der Koppeleinrichtung (22) und eine an der Nadelschwinge (12) angeordnete Anlenkstelle der Koppeleinrichtung (22) in der Ausgangsstellung einen im Wesentlichen maximal möglichen Abstand voneinander haben.

8. Ballenpresse (2) nach einem der vorhergehenden Ansprüche, **dadurch gekennzeichnet, dass** bei einer maximalen Schwenkung der Nadelschwinge (12) ein im Presskanal (4) angeordneter Presskolben (34) im Wesentlichen in einer Strecklage positioniert ist.

9. Ballenpresse (2) nach einem der vorhergehenden Ansprüche, **dadurch gekennzeichnet, dass** die Nadelschwinge (12) mindestens drei sich jeweils im Wesentlichen in zur Schwingenschwenkachse (8) senkrechten Ebenen erstreckende Bindenadeln (14) umfasst.

10. Ballenpresse (2) nach einem der vorhergehenden Ansprüche, **dadurch gekennzeichnet, dass** mindestens eine Bindenadel (14) mindestens eine ein bandförmiges Bindematerial (40) führende Führungsrolle (36) umfasst.

11. Ballenpresse (2) nach einem der vorhergehenden Ansprüche, **dadurch gekennzeichnet, dass** das Antriebselement (18) an einer einen Bindezyklus mit einer Umdrehung steuernden Steuerwelle (38) angeordnet ist.

12. Ballenpresse (2) nach einem der vorhergehenden Ansprüche, **dadurch gekennzeichnet, dass** die Ballenpresse (2) mindestens eine Bindeeinrichtung für ein bandförmiges Bindematerial (40) aus vorzugsweise einem verschweißbaren oder verklebbarem Kunststoffmaterial zur Umhüllung des zu pressenden Ballens aufweist, wobei die Bindeeinrichtung einen das Bindematerial (40) stoffschlüssig verbindenden Stoffschlusserzeuger (42) aufweist.

13. Ballenpressen nach Anspruch 12,
**dadurch gekennzeichnet, dass** die zumindest
eine Bindeeinrichtung eine Abrolleinrichtung (46) und einen Bandspeicher (76) aufweist, der einen Teil des zwischen der Abrolleinrichtung (46) und dem Stoffschlusserzeuger (42) geführten Bindematerials (40) aufnimmt, wobei der Bandspeicher (76) mindestens zwei von dem Bindematerial (40) umschlungene Bandspeicherachskörper (78) aufweist, von denen mindestens einer als Freiachskörper (80) derart beweglich angeordnet ist, dass der Abstand der Bandspeicherachskörper (78) zueinander veränderbar ist, und wobei der Bandspeicher (76) mindestens ein Bandspeicherrückstellelement (82) aufweist, durch das der Freiachskörper (80) mit einer den Freiachskörper (80) in eine den Abstand der Bandspeicherachskörper (78) vergrößernden Richtung bewegenden Kraft beaufschlagbar ist.

## Claims

1. A baling press (2) for agricultural crops with a baling channel (4) and with a needle rocker (12) which is arranged about a rocker pivot axis (8) in a rocker pivot axis plane orthogonal to a longitudinal centre axis of the baling channel (60), is pivotably mounted and driven by at least one drive arrangement (10 ), which needle rocker has at least one binding needle (14) movable by pivoting the needle rocker (12) through the baling channel (4), wherein the at least one drive arrangement (10) comprises a drive element (18) mounted rotatably about a drive axis of rotation (16) and a drive lever (20) arranged eccentrically thereon, wherein the drive lever (20) is pivotable about a drive lever axis of rotation (30) parallel to the drive axis of rotation (16), wherein the drive arrangement (10) has a coupling device (22) which is pivotable about a coupling pivot axis (24) positioned stationary relative to the baling channel (4), wherein the coupling device (22) is arranged at a spacing from the rocker pivot axis (8) of the needle rocker (12) on the needle rocker (12), wherein the drive lever (20) is arranged on the coupling device (22), wherein the rocker pivot axis (8), the drive axis of rotation (16), the coupling pivot axis (24) and the drive lever axis of rotation (30) are arranged in parallel and each spaced apart from one another, wherein the coupling device (22) comprises a first coupling lever (26) and at least one other coupling lever (28), wherein the first coupling lever (26) is movably connected to the other coupling lever (28), wherein the first coupling lever (26) is pivotable about the coupling pivot axis (24), and wherein the drive lever (20) which is pivotable about the drive lever pivot axis (30) is articulated on the first coupling lever (26).

2. The baling press (2) according to claim 1, **characterized in that** the baling (2) has at least one drive arrangement (10) on one side of the baling channel (4).

3. The baling press (2) according to claim 1, **characterized in that** the baling press (2) comprises a drive arrangement (10) on each of two opposite sides of the baling channel (4).

4. The baling press according to any one of the preceding claims, **characterized in that** the pivot axes of all the joints comprised by the coupling device (22) are positioned parallel to the rocker pivot axis (8).

5. The baling press (2) according to any one of the preceding claims, **characterized in that** the drive lever axis of rotation (30) which is parallel to the drive axis of rotation (16), about which the drive lever (20) is rotatably arranged on the drive element (18), is displaced from a coupling plane, in which the drive axis of rotation (16) and a drive coupling pivot axis (32) lie, in a starting position in which the needle rocker (12) is located before and after a needle rocker cycle that completes bale forming, about which coupling plane the drive lever (20) is pivotably arranged on the first coupling lever (26).

6. The baling press (2) according to claim 5, **characterized in that** the drive axis of rotation (16) and the drive lever axis of rotation (30) lie in a drive plane which, in a starting position, is positioned at an angle of 30° to 90° relative to the coupling plane.

7. The baling press (2) according to claim 5 or 6, **characterized in that**
an articulation point of the coupling device (22) that is stationary with respect to the baling channel (4) and the articulation point of the coupling device (22) that is arranged on the needle rocker (12) have an essentially maximum possible distance from one another in the starting position.

8. The baling press (2) according to any one of the preceding claims, **characterized in that** a plunger (34) arranged in the baling channel (4) is positioned substantially in an extended position when the needle rocker (12) is at its maximum pivoting.

9. The baling press (2) according to any one of the preceding claims, **characterized in that** the needle rocker (12) comprises at least three baler needles (14), each extending substantially in planes perpendicular to the rocker pivot axis (8).

10. The baling press (2) according to any one of the preceding claims, **characterized in that** at least one baler needle (14) comprises at least one guide roller (36) guiding a band-shaped binding material (40).

11. The baling press (2) according to one of the preceding claims, **characterized in that** the drive element (18) is arranged on a control shaft (38) which controls a baling cycle with one revolution.

12. The baling press (2) according to any one of the preceding claims, **characterized in that** the baling press (2) has at least one binding device for a band-shaped binding material (40) preferably made of a weldable or bondable plastic material for encasing the bale to be pressed, wherein the binding device has a material bond generator (42) which bonds the binding material (40) in an integrally bonded manner.

13. Baling presses according to claim 12,
**characterized in that** the at least one binding device has an unwinding device (46) and a band store (76) which accommodates part of the binding material (40) guided between the unwinding device (46) and the material bond generator (42), wherein the band store (76) contains at least two band score axle bodies (78) entwined by the binding material (40), at least one of which is movably arranged as a free axle body (80) in such a manner that the distance between the band store axle bodies (78) can be changed, and wherein the band store (76) has at least one band store return element (82), through which a force that moves the free axle body (80) in a direction that increases the distance between the band store axle bodies (78) can be applied to the free axle body (80).

## Revendications

1. Presse à balles (2) pour récoltes agricoles avec un canal de pression (4) et avec un balancier d'aiguille (12) entraîné par au moins un agencement d'entraînement (10) et monté de manière pivotante autour d'un axe de pivotement de balancier (8) qui est agencé dans un plan d'axe de pivotement de balancier orthogonal à un axe médian longitudinal du canal de pression (60), lequel balancier comprend au moins une aiguille de liage (14) mobile en faisant pivoter le balancier d'aiguille (12) à travers le canal de pression (4), dans laquelle au moins un agencement d'entraînement (10) comporte un élément d'entraînement (18) monté de manière rotative autour d'un axe de rotation d'entraînement (16) et un levier d'entraînement (20) disposé de manière excentrique sur celui-ci, dans laquelle le levier d'entraînement (20) peut pivoter autour d'un axe de rotation de levier d'entraînement (30) parallèle à l'axe de rotation d'entraînement (16), dans laquelle l'agencement d'entraînement (10) comprend un dispositif d'accouplement (22) qui peut pivoter autour d'un axe de pivotement d'accouplement (24) stationnaire par rapport au canal de pression (4), dans laquelle le dispositif d'accouplement (22) de l'axe de pivotement de balancier (8) du balancier d'aiguille (12) est agencé à distance du balancier d'aiguille (12), dans laquelle le levier d'entraînement (20) est agencé sur le dispositif d'accouplement (22), dans laquelle l'axe de pivotement de balancier (8), l'axe de rotation d'entraînement (16), l'axe de pivotement d'accouplement (24) et l'axe de rotation de levier d'entraînement (30) sont parallèles et espacés à chaque fois l'un par rapport à l'autre, dans laquelle le dispositif d'accouplement (22) comporte un premier levier d'accouplement (26) et au moins un autre levier d'accouplement (28), dans laquelle le premier levier d'accouplement (26) est relié de manière mobile à l'autre levier d'accouplement (28), dans laquelle le premier levier d'accouplement (26) peut pivoter autour de l'axe de pivot d'accouplement (24) et dans laquelle le levier d'entraînement (20) est articulé de manière pivotante sur le premier levier d'accouplement (26) autour de l'axe de rotation de levier d'entraînement (30).

2. Presse à balles (2) selon la revendication 1, **caractérisée en ce que** la presse à balles (2) comporte au moins un agencement d'entraînement (10) sur un côté du canal de pression (4).

3. Presse à balles (2) selon la revendication 1, **caractérisée en ce que** la presse à balles (2) comporte un agencement d'entraînement (10) sur chacun des deux côtés opposés du canal de pression (4).

4. Presse à balles selon l'une des revendications précédentes, **caractérisée en ce que** les axes de pivotement de l'ensemble des articulations comprises dans le dispositif d'accouplement (22) sont positionnées parallèlement à l'axe de pivotement de balancier (8).

5. Presse à balles (2) selon l'une des revendications précédentes, **caractérisée en ce que** l'axe de rotation de levier d'entraînement (30) parallèle à l'axe de rotation d'entraînement (16) et autour duquel le levier d'entraînement (20) est disposé de manière rotative sur l'élément d'entraînement (18), dans une position initiale dans laquelle le balancier d'aiguille (12) se trouve avant et après un cycle de balancier d'aiguille qui conclut le liage de la balle, est déplacé d'un plan d'accouplement dans lequel se trouvent l'axe de rotation d'entraînement (16) et un axe de pivotement d'accouplement d'entraînement (32), autour duquel le levier d'entraînement (20) est agencé de manière pivotante sur le premier levier d'accouplement (26).

6. Presse à balles (2) selon la revendication 5, **caractérisée en ce que** l'axe de rotation d'entraînement (16) et l'axe de rotation de levier d'entraînement (30) se trouvent dans un plan d'entraînement qui est positionné à un angle de 30° à 90° par rapport au plan d'accouplement dans une position initiale.

7. Presse à balles (2) selon la revendication 5 ou 6, **caractérisée en ce qu'**un point d'articulation du dispositif d'accouplement (22) stationnaire par rapport au canal de pression (4) et un point d'articulation du dispositif d'accouplement (22) disposé sur le balancier d'aiguille (12), ont une distance essentiellement maximale possible l'un de l'autre en position initiale.

8. Presse à balles (2) selon l'une des revendications précédentes, **caractérisée en ce que**, lors d'un pivotement maximal du balancier d'aiguille (12), un piston de pression (34) agencé dans le canal de pression (4) est positionné sensiblement en position d'extension.

9. Presse à balles (2) selon l'une des revendications précédentes, **caractérisée en ce que** le balancier d'aiguille (12) comporte au moins trois aiguilles de liage (14) s'étendant chacune sensiblement dans des plans perpendiculaires à l'axe de pivotement de balancier (8).

10. Presse à balles (2) selon l'une des revendications précédentes, **caractérisée en ce qu'**au moins une aiguille de liage (14) comporte au moins un rouleau de guidage (36) guidant un matériau de liage (40) en forme de bande.

11. Presse à balles (2) selon l'une des revendications précédentes, **caractérisée en ce que** l'élément d'entraînement (18) est agencé sur un arbre de commande (38) commandé par rotation d'un cycle de liage.

12. Presse à balles (2) selon l'une quelconque des revendications précédentes, **caractérisée en ce que** la presse à balles (2) comprend au moins un dispositif de liage pour un matériau de liage (40) en forme de bande de préférence d'une matière plastique soudable ou collable pour envelopper la presse à balles, dans laquelle le dispositif de liage comprend un générateur de liaison de matériau (42) reliant par liaison un matériau de liage (40).

13. Presses à balles selon la revendication 12, **caractérisées en ce que** l'au moins un dispositif de liage comprend un dispositif de déroulement (46) et un dispositif de stockage de bandes (76) qui reçoit une partie du matériau de liage (40) guidé entre le dispositif de déroulement (46) et le générateur de liaison de matériau (42), dans lesquelles le dispositif de stockage de bandes (76) comprend au moins deux corps d'axe de stockage de bande (78) enroulés autour du matériau de liage (40), dont au moins un est agencé de manière mobile en tant que corps d'axe libre (80) de sorte que la distance entre les corps d'axe de stockage de bande (78) l'un à l'autre peut être changée, et dans lesquelles le dispositif de stockage de bande (76) comprend au moins un élément de retour de stockage de bande (82) à travers lequel le corps d'axe libre (80) peut être sollicité par une force qui déplace le corps d'axe libre (80) dans une direction qui augmente la distance entre les corps d'axe de stockage de bande (78).
